**Europäisches Patentamt**

**European Patent Office**

**Office européen des brevets**

(19)

(11) Veröffentlichungsnummer : **0 458 210 B1**

(12)

# EUROPÄISCHE PATENTSCHRIFT

(45) Veröffentlichungstag der Patentschrift :
06.10.93 Patentblatt 93/40

(51) Int. Cl.⁵ : **H04L 9/00**

(21) Anmeldenummer : **91108032.3**

(22) Anmeldetag : **17.05.91**

(54) **Verfahren und Einrichtung zur Nachrichtenumschlüsselung.**

(30) Priorität : **22.05.90 DE 4016491**
**07.05.91 DE 4114777**

(56) Entgegenhaltungen :
**WO-A-89/01690**
**DE-A- 2 639 806**

(43) Veröffentlichungstag der Anmeldung :
**27.11.91 Patentblatt 91/48**

(73) Patentinhaber : **ELSNER, Peter**
**Fritz-Baer-Str. 27**
**D-81476 München (DE)**

(45) Bekanntmachung des Hinweises auf die
Patenterteilung :
**06.10.93 Patentblatt 93/40**

(72) Erfinder : **ELSNER, Peter**
**Fritz-Baer-Str. 27**
**D-81476 München (DE)**

(84) Benannte Vertragsstaaten :
**AT CH ES FR GB IT LI NL SE**

EP 0 458 210 B1

## Beschreibung

Die Erfindung betrifft das Gebiet der Nachrichten-Umschlüsselung und das Gebiet der Identifizierung von Nachrichten, Objekten, Personen etc. mit den Teilgebieten "Autorisierung", "Identifizierung" und "Authentifizierung".

Aus DE-A-3 827 172 ist ein Verfahren bekannt, das Identifizier- und Verschlüsselungsaufgaben mit einem zufallsabhängig aus Knoten und Ästen gebildeten Verzweigungsgeflecht löst, in dem Eingangsnachrichten knotenweise seriell auf Umschlüsselpfaden assoziierte Ausgangsnachrichten erzeugen; dabei ist das Verzweigungsgeflecht in Abhängigkeit von verfahrensinternen und/oder externen Nachrichten veränderbar. Die Patentschrift offenbart die grundlegende Lösung der Nachrichtenumschlüsselung mittels eines Verzweigungsgeflechtes ; die offenbarte Lösung erfordert aber erheblich mehr Schlüsselinformation und Verzweigungsinformation, als für die Realisierung eines bestimmten Schlüsselraumes unbedingt notwendig ist. Sie liefert keine Lösung für ein Verzweigungsgeflecht mit größtmöglichem Schlüsselraum bei kleinstmöglichem Schlüsselaufwand.

Der Erfindung liegt die Aufgabe zugrunde, für derartige Umchlüsseleinrichtungen ein Verfahren für die Erzeugung und Anwendung eines kostenoptimalen Verzweigungsgeflechtes zur Nachrichtenumschlüsselung zu schaffen; d.h. eines Verzweigungsgeflechtes, das bei größtmöglichem Schlüsselraum den Aufwand für die Verzweigung und für die Schlüsselinformation auf ein Minimum reduziert.

Diese Aufgabe wird erfindungsgemäß durch die kennzeichnenden Merkmale der Ansprüche 1, 10, 17 und 26 gelöst.

Die Ansprüche 2 bis 9 und 11 bis 16 kennzeichnen bevorzugte Verfahrensgestaltungen der Erfindung.

Die Ansprüche 18 bis 25 und 27 bis 32 kennzeichnen bevorzugte Ausgestaltungen einer Vorrichtung, die als Ausführungsbeispiel nachfolgend näher erläutert ist.

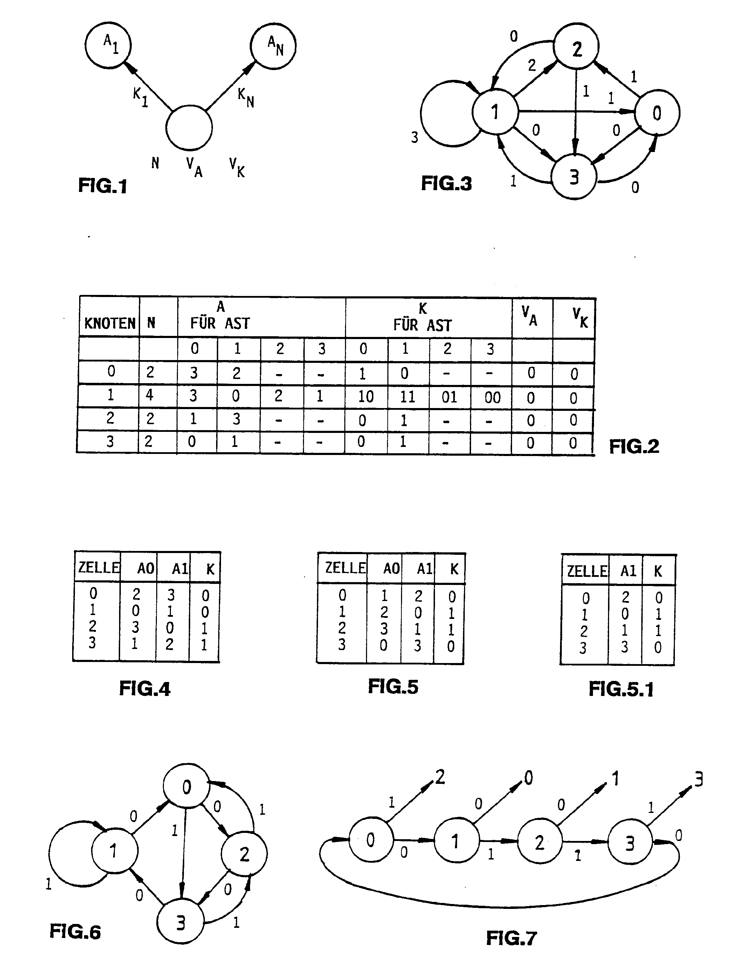

Dabei wird zunächst auf das aus DE-A-3 827 172 bekannte Verschlüsselungsverfahren mittels eines aus Knoten und Ästen bestehenden Verzweigungsgeflechtes eingegangen. Ausgehend von den Eigenschaften der Knoten erläutert die Beschreibung anhand der Abbildungen Fig. 1 bis Fig. 9 die Eigenschaften und Realisierungen des Verzweigungsgeflechtes in einem "Netzspeicher" und konzipiert mittels eines solchen Netzspeichers eine Umschlüsseleinrichtung, die multifunktional für alle Anforderungen hinsichtlich Autorisierung, Identifizierung, Authentifizierung und Datenverschlüsselung einsetzbar ist, u.a. auch für die Bargeldsubstitution. Es zeigen:

Fig. 1: Den Knoten des Verzweigungsgeflechtes,

Fig. 2, 3: Ein Verzweigungsgeflecht, tabellarisch und graphisch,

Fig. 4, 6: Ein mittels Speicherinformation realisiertes Verzweigungsgeflecht,

Fig. 5, 7, 5.1: Eine bevorzugte Lösung für ein mittels Speicherinformation realisiertes Verzweigungsgeflecht

Fig. 8: Ein Blockschaltbild der Umschlüsseleinrichtung

Fig. 9: Einen in (Prozeduren) gegliederten Umschlüsselprozess als Beispiel.

## Der Knoten

Fünf knotenindividuelle Parameter kennzeichnen die Verschlüsselungseigenschaften des Verzweigungsgeflechtes (Fig. 1):

1. Das Knotenmerkmal N, das die Anzahl der vom Knoten ausgehenden Äste bestimmt,

2. die Zielknoten $A_1$ bis $A_N$ der von einem Knoten ausgehenden Äste, die die Verzweigung bestimmen,

3. die Umschlüsselmerkmale K dieser Äste, bzw. der Knoten, die den Umschlüsselcode bestimmen,

4. der Verzweigungsvektor $V_A$ des Knotens, der für die Eingangsnachricht die Zählweise, d.h. die Aufrufreihenfolge der Äste festlegt.

5. Der Umschlüsselvektor $V_K$ des Knotens, der ein Umschlüsselmerkmal K des Knotens einem bestimmten Ast zuweist.

Ein derartiger Knoten des Geflechts, an dem eine Eingangsnachricht "ansteht" bewirkt die Umschlüsselung von i Bit dieser Eingangsnachricht in eine Ausgangsnachricht, indem er:
- die kodierten i Bit der Eingangsnachricht mittels seines Verzweigungsvektors $V_A$ als einen bestimmten Verzweigungsast interpretiert,
- diesen Verzweigungsast aus seinen $N = 2^i$ Ästen auswählt,
- mittels des Umschlüsselvektors $V_K$ das diesem Ast zugewiesene Umschlüsselmerkmal K bestimmt und
- mittels dieses Umschlüsselmerkmals die Ausgangsnachricht bildet.

**Das Verzweigungsgeflecht**

Eine Anzahl von n Knoten mit innerhalb n zufallsabhängig erzeugten Parametern N, A, K, $V_A$ und $V_K$ bilden ein zufallsabhängiges Verzweigungsgeflecht. Ein solches Verzweigungsgeflecht ist tabellarisch durch Auflisten aller Knoten mit den jeweils zugeordneten Parametern darstellbar. Figur 2 zeigt den allgemeinen Fall einer solchen Liste für das Verzweigungsgeflecht nach Figur 3.

Der Übersicht halber wurde hier für alle Knoten ein Verzweigungsvektor $V_A$ = 0 gewählt, d.h. jeder Knoten bezieht die Eingangsnachricht auf die in der Liste einmal festgelegte Reihenfolge der Äste (eine "00" auf Ast 0, eine "11" auf Ast 3 usw.).

Diese Reihenfolge ist aber mit dem Verzweigungsvektor $V_A$ beliebig variierbar; so könnten mit $V_A$ = 1 z.B. die jeweils geradzahlig und ungeradzahlig bezifferten Äste miteinander vertauscht werden, womit sich eine andere Verzweigungsstruktur ergibt.

Ebenso wurde hier auch der Umschlüsselvektor für alle Knoten $V_K$ = 0 gewählt, d.h. jeder Knoten weist die Umschlüsselmerkmale den Ästen zu, wie in der Liste einmal festgelegt. Diese Festlegung ist aber mit dem Umschlüsselvektor $V_K$ beliebig variierbar: so könnten mit $V_K$ = 1 z.B. die Umschlüsselmerkmale nebeneinander liegender Äste miteinander vertauscht werden, womit sich ein anderer Umschlüssel-Code ergibt.

Für die Umschlüsselung in einem solchen Verzweigungsgeflecht selektieren die Zeichen einer Eingangsnachricht knotenweise seriell in einem Selektierlauf die Äste des Verzweigungsgeflechtes und selektieren damit einen bestimmten Umschlüsselpfad durch das Geflecht, auf dem die Ausgangsnachricht abhängig von den Umschlüsselmerkmalen der durchlaufenen Knoten und Äste gebildet wird. Dabei ist die Länge des umzuschlüsselnden Eingangsnachrichtenblocks unbegrenzt, unabhängig von der Knotenzahl des Geflechts; jedoch bestimmt diese Knotenzahl die Mächtigkeit des Schlüsselraums und damit die Periodizität der Verschlüsselung. Das Umschlüsseln einer Eingangsnachricht kann bei einem beliebigen Knoten starten, der dann aber für das Rückschlüsseln verbindlich ist.

Damit kennzeichnen zwei Parameter das Verzweigungsgeflecht:
- die Anzahl n der Knoten des Geflechts,
- der Startknoten $A_S$ für die Umschlüsselung eines Datenblocks.

Für das Beispiel Fig. 2 mit n = 4 Knoten und Start bei Adresse 0 bewirkt z.B. eine 6-Bit-Eingangsnachricht 110011 einen Umschlüsselpfad über die Knoten 0-2-3-0-3-1 und damit eine Ausgangsnachricht 010110.

Mit einem Verzweigungsvektor $V_A$ = 1 für Knoten 0 würde sich dagegen ein anders verzweigter Umschlüsselpfad über die Knoten 0-3-1-3-1 ergeben und damit die Ausgangsnachricht 111010.

Ein Umschlüsselvektor $V_K$ = 1 für Knoten 2 würde bei gleichem Umschlüsselpfad 0-2-3-0-3-1 die Ausgangsnachricht in 000110 ändern, d.h. er bewirkt lediglich einen anderen Umschlüsselcode.

Datenblöcke, deren letztes umzuschlüsselndes Bit wie in diesem Beispiel an einem Knoten mit mehr als 2 Ästen ansteht, werden um die erforderliche Bitzahl z.B. durch 00... ergänzt, wobei dementsprechend nur ein Bit der erhaltenen Ausgangsnachricht zu werten ist.

Das Beispiel zeigt, daß ein nach diesem Verfahren verschlüsseltes Bit der Ausgangsnachricht von der Summe aller vorhergehenden Bit der Eingangsnachricht abhängt, d.h. die Änderung eines einzigen Bit der Eingangsnachricht wirkt sich auf alle nachfolgenden Bit der Ausgangsnachricht aus (Lawineneffekt). Voraussetzung hierfür ist, daß die von einem Knoten ausgehenden Äste unterschiedliche Zielknoten haben. Dieser Lawineneffekt wirkt sich auf alle Bit der umgeschlüsselten Nachricht, d.h. auch auf die vorhergehenden Bit aus, wenn die in einem Durchlauf erhaltene Ausgangsnachricht unter jeweiliger Umkehrung der Bitfolge mehrmals umgeschlüsselt wird.

**Realisierung des Verzweigungsgeflechts**

Das nach Fig. 2 als tabellarische Liste darstellbare Verzweigungsgeflecht ist als gespeicherte Information in Hardware oder Software realisierbar; dabei läßt sich der nach Fig. 2 für den allgemeinen Fall erforderliche Speicherplatz reduzieren, wenn die vorgesehene Anwendung nicht alle aufgezeigten Freiheitsgrade erfordert; Fig. 4 zeigt tabellarisch einen Speicher, der mit n Zellen die n Knoten eines Verzweigungsgeflechts mit jeweils 2 Ästen pro Knoten bildet, wie in Fig. 6 dargestellt. Die Festlegung auf eine einheitlich gleiche Astzahl für alle Knoten erübrigt das Knotenmerkmal N.
- In jede Zelle des Speichers sind zwei aus n zufallsbedingt ausgewählte, unterschiedliche Zieladressen A0 und A1 als Äste eingetragen; dabei soll jede der n möglichen miteinander verketteten Zieladressen im Speicher nur zweimal und jede Adressenpaarung A0/A1 nur einmal vorkommen.

Diese Festlegung ermöglicht (n-1)!(Fakultät) unterschiedliche Verzweigungsgeflechte, kombinierbar mit je $2^n$ unterschiedlichen Umschlüsselmerkmalen K.
- Der Ast mit der Zieladresse A0 wird generell vom Bit "0" der Eingangsnachricht ausgewählt, womit sich

3

ein Verzweigungsvektor $V_A$ erübrigt.
- Das ebenfalls zufallsbedingt ausgewählte Umschlüsselmerkmal K ist fest dem Ast A0 zugeordnet, womit sich ein Umschlüsselvektor $V_K$ erübrigt.

Für die vorgesehene Anwendung zur Nachrichtenumschlüsselung soll der für das Verzweigungsgeflecht erforderliche Speicherplatz weiter reduziert werden auf nur wenige Parameter, die den Schlüsselraum und die kryptologischen Eigenschaften des Verzweigungsgeflechtes bestimmen.

Bestimmend für die Umschlüsseleigenschaft des Verzweigungsgeflechtes sind allein die Umschlüsselcharakteristiken der Knoten, nicht die Zellenadresse. Dasselbe Verzweigungsgeflecht Fig. 4 wird realisiert als Kette von aufeinanderfolgenden Knoten, die über je einen ersten Ast A0 miteinander verbunden sind und die über je einen weiteren Ast A1 zu beliebigen anderen Knoten vernetzt sind. Fig. 5 zeigt tabellarisch den Speicher und Fig. 7 das Verzweigungsgeflecht in gestreckter Kettendarstellung. Jeder Knoten des Geflechtes hat eine eigene individuelle Umschlüsselcharakteristik, die durch sein eigenes Umschlüsselmerkmal und die Charakteristik aller nachfolgenden Knoten, d.h. durch seine örtliche Lage im Verzweigungsgeflecht gegeben ist.

Die Darstellung Fig. 5 zeigt, daß die kettenbildende Zieladresse A0 keinen Speicherplatz benötigt, da sie aus der jeweils aktuellen Zellenadresse ableitbar ist (hier A0 = Zellenadresse + 1).

Es ergibt sich die Darstellung Fig. 5.1, die alle Umschlüsseleigenschaften des Verzweigungsgeflechtes und den Schlüsselraum ausweist. Den Schlüsselraum bestimmen die Umschlüsselmerkmale K und die Zieladressen A1, die die örtliche Lage eines Knotens relativ zu den anderen Knoten bestimmen. n Knoten mit je 2 Ästen, d.h. einem Zielast A1 und mit je i Bit pro Knoten als Umschlüsselmerkmal K liefern z.B. einen Schlüsselraum von

$$2^{i.n} \cdot (n - 1) ! \text{ (Fakultät).}$$

Dabei soll jede Zieladresse A1 nur einmal vorkommen und nicht den Nachfolgeknoten benennen. Die i Umschlüsselmerkmale erfordern dabei i Umschlüsselabschnitte (siehe unten).

Das Prinzip ist nicht auf einen Zielast A1 (eine Zieladresse A1) beschränkt: Je Knoten sind N beliebig viele Zieläste A1, A2, A3 ... realisierbar, auch knotenindividuell verschieden. Dabei gilt immer für den ersten, nicht gespeicherten Ast A0 das Kettenprinzip. Entsprechend der Anzahl Zieläste N umfaßt das Umschlüsselmerkmal K sowie ein Zeichen der Eingangsnachricht für einen Selektierabschnitt dann mehrere Bit. Ein solches Multiast-Verfahren schlüsselt somit mehrere Bit der Eingangsnachricht zugleich um; d.h. hat Vorteile hinsichtlich der Umschlüsselgeschwindigkeit.

Da sowohl das Umschlüsselmerkmal K als auch die Zieladressen A1 den Schlüsselraum bestimmen, läßt sich bei Bedarf der Speicherplatz für das Verzweigungsgeflecht, d.h. für den Schlüssel, reduzieren, wenn eine der beiden Einflußgrößen fest vorgegeben wird und damit nicht als Schlüssel zu speichern ist.

Das Umschlüsselmerkmal K kann entfallen, wenn es nach einer vorgegebenen Funktion $f_K(A1)$ aus der Zieladresse A1 abgeleitet wird, z.B. als niederwertigstes Bit der Zieladresse A1 oder durch Umschlüsseln von A1; damit benötigen n = $2^A$ Knoten einen Speicherplatz von n.A Bit und liefern einen Schlüsselraum von (n-1) ! (Fakultät).

Die Zieladresse A1 kann entfallen, wenn sie z.B. ähnlich der Folgeadresse A0 als vorgegebene Funktion $f_{A1}(Z)$ aus der jeweils anstehenden Knotenadresse Z und/oder der Selektierschrittfolge abgeleitet wird, was z.B. bei Realisierung in daraufhin strukturierten Speichern den gleichzeitigen Zugriff auf eine Vielzahl mittels $f_{A1}(Z)$ zusammenhängender Knoten ermöglicht:

z.B. für n = $2^A$ Knoten aus: A1 = Z + $2^{A-s}$.

s zählt darin den jeweiligen Selektierschritt:

$$s = 1, 2, 3 ... \text{bis} (A - 1), 1, 2, 3 .... \text{usw.}$$

Damit benötigen n = $2^A$ Knoten mit einem Bit als Umschlüsselmerkmal je Knoten einen minimalen Speicherplatz von nur n Bit und liefern damit einen Schlüsselraum von $2^n$. Speicherzellen mit 8 Bit Speicherkapazität realisieren damit 8 Knoten, so daß sich übliche Schlüssel von 64 Bit als Verzweigungsgeflecht in nur 8 Speicherzellen realisieren lassen.

Die Umschlüsselmerkmale K können eine Zufallsinformation sein, z.B. Rauschgeneratoren entnommen. Die Zieladressen A1 können eine Zufallsverwürfelung der Zellenadressen Z sein. Das Verfahren zur Bildung eines solchen Verzweigungsgeflechts aus miteinander verketteten Knoten ist einfach: Aus einer Menge Speicherzellenadressen 1-n wird zufallsbedingt jeweils eine Adresse entnommen und in jeweils eine der Speicherzellen 1-n eingetragen. Für eine geheime Erzeugung derartiger Geflechte in einem Speicher lassen sich somit "blind" in zufällig ausgewählte Speicherzellen zufällig ausgewählte Speicherzellenadressen einschreiben.

Folgende Parameter kennzeichnen ein solches Geflecht:
- die Anzahl n der Knoten des Geflechts,
- die Zieladressen A1 der Knoten,
- die Knotenmerkmale N,
- die Umschlüsselfunktion $f_K(A1)$,

- die Verzweigungsfunktion $f_{A1}(Z)$,
- der Startknoten $A_S$ für die Umschlüsselung.

Dasselbe Verzweigungsgeflecht bewirkt die Umschlüsselung für beide Umschlüsselrichtungen, indem für Verschlüsselung und Entschlüsselung im Verzweigungsgeflecht der gleiche Umschlüsselpfad durchlaufen wird; lediglich die Verknüpfung der Eingangsnachricht mit den Knoteninformationen zur Erzeugung der Ursprungsinformation und der Zieladressen ist unterschiedlich.

Die vorgegebenen Funktionen $f_K(A1)$ und $f_{A1}(Z)$ können für alle Knoten des Geflechts einheitlich (wie oben) oder knotenindividuell verschieden gewählt werden. Sie bieten damit die Möglichkeit, die Umschlüsselcharakteristik und die Verzweigungsstruktur einheitlich für alle Knoten oder knotenindividuell zu verändern. Diese Veränderungen können z.B. nach einem Selektierdurchlauf, eine Umschlüsselprozedur (siehe unten) nach jeder Eingangsnachricht oder abhängig von externen Prozessen erfolgen.

Den vollen verfügbaren, oben genannten Schlüsselraum nutzen Eingangsnachrichten, deren Zeichenanzahl ausreicht, um alle Knoten des Verzweigungsgeflechtes erreichen zu können; Eingangsnachrichten mit einer Zeichenanzahl $m < n$ nutzen - abhängig von der zufälligen Verzweigung - eine Untermenge dieses Schlüsselraums. Durch gezielt ausgelegte Verzweigung, wie z.B. durch obige Funktion für A1, lassen sich für $m < n$ alle maximal möglichen Knoten nutzen; jedoch reduziert sich dabei für die Zieladressen der Anteilsfaktor am Schlüsselraum.

Zufällige Zieladressen A1 und zufällige Umschlüsselmerkmale K liefern einen zufälligen Schlüssel aus dem Schlüsselraum mit zufälligen Eigenschaften. Erfordern spezielle Anwendungen spezielle Schlüsseleigenschaften, so reduziert sich entsprechend der Schlüsselraum. Wird z.B. verlangt, daß umgeschlüsselte Eingangsnachrichten unbegrenzter Länge fortlaufend mit unbegrenzter Periodizität wiederholt umgeschlüsselt werden, so läßt sich dies durch einschränkende Bedingungen bei der zufälligen Wahl der Zieladressen und Umschlüsselmerkmale erreichen, z.B.: Zielast A1 = Z + 2 für alle Knoten 0 bis (n-1), außer (bei Startknoten $A_S = 0$)

Knoten 1:        A1 = 3
Knoten 2:        A1 = 1
Umschlüsselmerkmal K0 = 1
Umschlüsselmerkmal K1 ungleich K2.

Darin ist Z die anstehende Knotenadresse.

Obige Ausführungen zeigen, daß Verzweigungsgeflechte nach diesem Verfahren beliebige Schlüsselräume realisieren; sie benötigen lediglich den prinzipiell für einen Schlüsselraum $2^n$ erforderlichen minimalen Speicherplatz von n Bit. Nachfolgend wird erläutert, wie sich ein mittels Verzweigungsgeflecht realisierter Schlüsselraum maximal für Nachrichten begrenzter Länge nutzen läßt:

Nachrichten mit m Bit Länge ermöglichen $2^m$ Varianten und damit $2^m!$ (Fakultät) mögliche unterschiedliche Verwürfelungen/Verschlüsselungen. Für übliche Nachrichtenlängen von z.B. 64 Bit wird nur eine Untermenge dieses Schlüsselvolumens in einem Schlüsselraum realisiert. Für Nachrichten von nur wenigen Bit wird aber häufig eine volle Nutzung dieses Schlüsselvolumens angestrebt. Eine Nachricht von z.B. 3 Bit ermöglicht z.B. 40320 Schlüssel/Verwürfelungen, die sich durch Verschlüsselung mittels eines Verzweigungsgeflechtes realisieren lassen.

Die Eingangsnachricht wird bei dieser "Maximalverschlüsselung" zeichenweise in mehreren Selektierdurchläufen und für jede Zeichenposition mit einem eigenen Schlüssel verschlüsselt. Dabei bestimmt die Zeichenposition mit ihrer Anzahl möglicher Verwürfelungen die Mächtigkeit dieses dem Zeichen zugeordneten Schlüssels.

Beispiel für eine Nachricht mit m = 3 Bit:

Die Nachricht ermöglicht $2^3! = 40320$ Verwürfelungen.

Erforderlich ist ein Verzweigungsgeflecht mit insgesamt $2^m-1 = 7$ Knoten mit $7\times3 = 21$ Bit als Umschlüsselmerkmale für die 3 Bitpositionen. Die Zieladressen A1 des Verzweigungsgeflechtes werden nach der oben erläuterten Funktion aus den anstehenden Kotenadressen abgeleitet:

$$A1 = Z + 2^{3-s},$$

d.h. die Zieladresse A1 zählt für die 3 Selektierschritte A1 = Z+4; A1 = Z+2; A1 = Z+4.

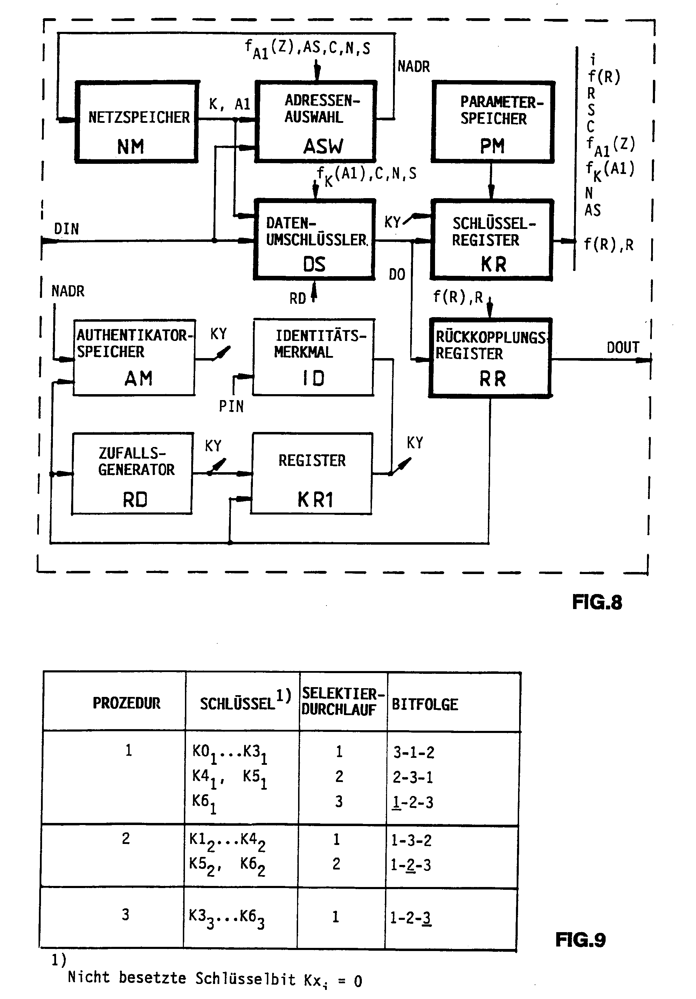

Die Nachricht wird in 3 Ümschlüsselprozeduren mit 3 verschiedenen Schlüsseln verschlüsselt, die den Selektierdurchläufen je Prozedur in selektierlaufindividuelle Teilschlüssel unterteilt sind. Fig. 9 zeigt als Tabelle den in Prozeduren und Selektierdurchläufe unterteilten Umschlüsselprozess mit der den Selektierdurchläufen jeweils zugeordneten Bitfolge. Das Verfahren bewirkt für die Bitpositionen 1/2/3 die entsprechende Anzahl Verwürfelungen 70/36/16 und damit insgesamt das maximal für m=3 mögliche Schlüsselvolumen von $70\times36\times16 = 40320$.

Für übliche Verschlüsselungsaufgaben mit üblichen Nachrichtenlängen lassen sich die beschriebenen Umschlüsselparameter im Rahmen des angestrebten Schlüsselraumes erheblich reduzieren.

Beispiel 1:

. Nachrichtenlänge m = 64 Bit,
. eingeteilt in 2 Umschlüsselprozeduren zu je 32 Bit,
. je Umschlüsselprozedur 3 Selektierdurchläufe unter jeweiliger Umkehrung der Bitfolge,
. gewählt ein Verzweigungsgeflecht mit n = 64 Knoten,
. Schlüssel von 2 Bit je Knoten = 128 Bit als Umschlüsselmerkmal K,
. Zieladressen A1 mittels Funktion vorgegeben.
Diese Lösung realisiert mit einem Speicherplatz von 16 Byte einen Schlüsselraum von $2^{128}$.

Mittels schneller Halbleiterspeicher realisiert, die diese 16 Byte intern parallel verarbeiten, ist diese Lösung um Größenordnungen schneller als z.Zt. bekannte Umschlüsselverfahren.

Beispiel 2:

. Nachrichtenlänge m = 64 Bit,
. eingeteilt in 6 Umschlüsselprozeduren zu je 10(4) Bit,
. je Umschlüsselprozedur 3 Selektierdurchläufe unter jeweiliger Umkehrung der Bitfolge,
. gewählt ein Verzweigungsgeflecht mit n = 64 Knoten,
. Schlüssel von 6 Bit je Knoten = 384 Bit als Zieladresse A1,
. Umschlüsselmerkmal K = je Abschnitt ein zugeordnetes Bit von A1.
Diese Lösung realisiert mit einem Speicherplatz von 48 Byte einen Schlüsselraum von 63!(Fakultät).

Realisiert in einem Halbleiterspeicher, der intern auf 3 Zeilen je 16 Byte parallel verarbeitet, ist auch diese Lösung erheblich schneller als z.Zt. bekannte Verfahren.

Alle beschriebenen Verfahren zur Nachrichtenumschlüsselung mittels Verzweigungsgeflecht kennzeichnen folgende wesentlichen kryptographischen Eigenschaften:
. Vollständigkeit,
d.h. jedes Ausgangsbit eines Datenblocks ist von jedem Eingangsbit echt abhängig,
. Lawineneffekt,
d.h. die Änderung eines beliebigen Eingangsbits eines Datenblocks ändert im Mittel die Hälfte der Ausgangsbits,
. Nichtlinearität,
d.h. jedes Ausgangsbit eines Datenblocks ist nichtlinear von jedem Eingangsbit abhängig,
. Korrelationsimmunität,
d.h. auch eine beliebige Anzahl zur Analyse verfügbarer Datenblöcke mit bekannter Eingangs- und Ausgangsinformation ermöglicht keine Korrelationen zwischen beiden.

**Die Umschlüsseleinrichtung**

Ein nach dem oben beschriebenen Verfahren organisierter "Netzspeicher", ergänzt durch Mittel zur Steuerung bzw. Veränderung seiner Schlüssel bzw. Schlüsselparameter sowie zur Steuerung des Datenflusses, ist für eine Vielzahl von Anwendungen als Umschlüsseleinrichtung verwendbar.

Derartige Umschlüsseleinrichtungen sind sicher gegen analytische Angriffe auf den Schlüssel, da das Verfahren auf einer extern nicht ermittelbaren, unzugänglichen Speicherinformation beruht. Mechanische Angriffe auf den Schlüssel durch Öffnen des Speicherchips und Analysieren der Informationsstrukturen lassen sich durch geeignete Speicherverfahren unterbinden, die bei chipinterner Analyse ihre Speicherinformation verlieren.

Obwohl die Sicherheit des Verfahrens auf der gespeicherten Information beruht, kann ein Teil dieser Schlüsselinformation bekannt, z.B. standardisiert, sein, wenn der jeweils andere Teil geheim bleibt.

Fig. 8 zeigt das Blockschaltbild einer solchen Umschlüsseleinrichtung; die Grundelemente für eine analytisch sichere Umschlüsselung des Datenflusses sind verstärkt hervorgehoben.

Basis der Umschlüsseleinrichtung ist der Netzspeicher NM, dessen n Zellen, wie oben beschrieben, zufallsbedingt "verwürfelt" die 1 bis n Zieladressen A1 und/oder Umschlüsselmerkmale K speichern und damit das Verzweigungsgeflecht bilden. Dieser Netzspeicher NM läßt sich als Festwertspeicher realisieren; gegebenenfalls "maskenprogrammiert".

Die veränderbaren Schlüsselparameter dieser Umschlüsseleinrichtung sind:
. Die Startadresse $A_S$ für die Umschlüsselung eines Datenblocks,
. die Umschlüsselrichtung C, die Verschlüsseln oder Entschlüsseln bestimmt,
. die Knotenmerkmale N, die die Astzahl bestimmen,

. die Bitanzahl i pro Umschlüsselprozedur

. die Anzahl Selektierdurchläufe R pro Umschlüsselabschnitt,

. die Bitfolge f (R) bei wiederholten Selektierdurchläufen,

. die Umschlüsselfunktion $f_K(A1)$,

. die Verzweigungsfunktion $f_{A1}(Z)$,

. der Verzweigungsvektor $V_A$,

. die Länge des Umschlüssel-Datenblocks m

. die Selektiercharakteristik S, die die Eingangsdaten kodiert.

Ein Parameterspeicher PM, ebenfalls als Festwertspeicher ausführbar, speichert diese Schlüsselparameter für einen Basis-Umschlüsselmode, und lädt diese Basisparameter auf Anforderung in das Schlüsselregister KR.

Diese vorgegebenen Parameter bzw. Funktionen lassen sich durch z.B. externes Laden des Schlüsselregisters verändern.

Als Basisparameter für ein Verzweigungsgeflecht von n = 64 Knoten mit je i = 2 Bit Umschlüsselmerkmalen je Knoten könnten z.B. festgelegt sein:

. Startadresse $A_S$ = 0

. Umschlüsselrichtung C = 0, d.h. Entschlüsseln,

. N = 2 Äste für alle Knoten,

. R = 3 Selektierdurchläufe je Umschlüsselprozedur,

. f(R): Bitfolge jeweils umgekehrt ("first out - last in"),

. $f_K(A1)$: DO für Ast A0 = niederwertigstes Bit von A1,

. Verzweigungsfunktion: $f_{A1}(Z)$: keine

. Verzweigungsvektor $V_A$ = 0 für alle Bit des Verzweigungsschlüssels,

. Länge des Umschlüsseldatenblocks m = 64 Bit

. Selektiercharakteristik S = 0: DIN = 0 selektiert Ast A0.

Die Länge des Datenblocks m sollte nicht größer als die Knotenzahl m des Geflechts sein, aber so groß, daß analytische Angriffe aussichtslos sind.

Die Umschlüsselcharakteristik der Einrichtung wird bestimmt von dem Verzweigungsgeflecht und einer Selektiercharakteristik, die anstehende Zeichen der Eingangsnachricht in selektierte Äste des Verzweigungsgeflechtes umkodiert. Diese Selektiercharakteristik, die das Schlüsselregister KR als Selektierschlüssel speichert, ermöglicht ohne externes Nachladen des Schlüsselregisters eine Veränderung der Umschlüsselcharakteristik z.B. nach jedem Selektierdurchlauf:

Das Schlüsselregister ordnet jedem der m Bit des Umschlüsseldatenblocks als Selektierschlüssel ein Bit S zu, das die Kodierung des betreffenden Datenblock-Bit in einen selektierten Ast bestimmt; d.h. es bestimmt, welche Eingangsinformation einen linken Ast A0 zum Nachfolgeknoten und welche einen rechten Ast A1 zu einem beliebigen Zielknoten auswählt, z.B.:

S = 0:     linker Ast A0 für DIN = 0,
           rechter Ast A1 für DIN = 1,
S = 1:     rechter Ast A1 für DIN = 0,
           linker Ast A0 für DIN = 1.

Der Selektierschlüssel S und die Eingangsinformation DIN des Umschlüsseldatenblocks selektieren so mittels EXOR-Verknüpfung den jeweiligen Ast für das umzuschlüsselnde Bit. Da der Selektierschlüssel unabhängig vom anstehenden Knoten nur dem anstehenden Zeichen der Eingangsinformation zugeordnet ist, bestimmt derselbe Selektierschlüssel in verschiedenen Selektierdurchläufen die Verzweigung unterschiedlicher Knoten. Mit Änderung dieses Selektierschlüssels ändert sich die Umschlüsselcharakteristik. Das Schlüsselregister KR ermöglicht eine solche Veränderung des Selektierschlüssels u.a. nach jeder Eingangsnachricht, z.B. durch Weiterzählen (1-Addition) des Selektierschlüssels oder einer anderen vorgegebenen Funktion mit vorgegebenen Parametern. Ebenso wäre eine nichtlineare Veränderung des Selektierschlüssels möglich, z.B. durch Herleitung dieses Schlüssels, wie auch der Umschlüsselmerkmale, aus einer separaten, linear mittels Zähler veränderbaren Umschlüsseleinrichtung.

Damit bildet ein zu Beginn der Umschlüsselprozedur einmal ins Schlüsselregister geladener Selektierschlüssel $2^m$ Umschlüsselcharakteristiken für $2^m$ Umschlüsseldatenblöcke; d.h. ohne Nachladen des Schlüsselregisters KR zeigt sich eine Periodizität erst nach Durchlauf von $2^m$ Datenblöcken; bis dahin trifft jeder Datenblock auf eine andere, individuelle Umschlüsselcharakteristik.

Eine für denselben Umschlüsselprozess ständig wiederholte Eingangsnachricht (z.B. 000---) würde damit erst nach $2^m$ Selektierdurchläufen eine Wiederholung der umgeschlüsselten Ausgangsnachricht liefern; d.h. sie liefert damit lebenslänglich Einmalschlüssel. Diese Eigenschaft läßt sich für Pseudozufallsgeneratoren verwenden.

EP 0 458 210 B1

Prinzipiell sind die m Bit des Selektierschlüssels mit den m Bit der Eingangsnachricht vertauschbar, vorausgesetzt, die davon abhängigen Verknüpfungen werden in der Umschlüsseleinrichtung entsprechend gesteuert. Diese Vertauschung kann bitweise nach vorgegebener Funktion erfolgen.

Die Adressauswahl ASW bildet aus der jeweiligen Zieladresse A1 des Netzspeichers und dem Zeichen der Eingangsnachricht DIN nach Vorgabe der Parameter C, N, $f_{A1}(Z)$, S und AS die jeweilige nächste Zellenadresse NADR, z.B. für S = 0:

DIN = 0            :Linker Ast NADR = Z+1

DIN = 1            :Rechter Ast NADR = A1.

Der Datenumschlüssler DS bildet aus dem Umschlüsselmerkmal K bzw. der Zieladresse A1 und dem Zeichen der Eingangsnachricht DIN nach Vorgabe der Parameter C, N, S und $f_K$ (A1) die jeweils umgeschlüsselte Information D0, z.B. für S = 0:

DIN = 0 (linker Ast):            D0 = niederwertigstes Bit von A1 (oder Merkmal K),

DIN = 1 (rechter Ast):            D0 = niederwertigstes Bit von A1 (oder Merkmal K) invertiert.

Für beide Umschlüsselrichtungen Verschlüsseln/Entschlüsseln wird im Netzspeicher NM der gleiche Umschlüsselpfad durchlaufen; die Umschlüsselrichtung steuert der Parameter C durch entsprechend andere Datenverknüpfung in der Adressenauswahl ASW und im Datenumschlüssler DS. Dieser Parameter C läßt sich, gemeinsam mit weiterer Schlüsselinformation, als unsymmetrischer Schlüssel, d.h. nur für eine Verschlüsselungsrichtung verwendbar, verschlüsselt öffentlich übertragen.

In einem derart aus m Bit DO gebildeten umgeschlüsselten Datenblock ist jedes Bit abhängig von der Summe aller vorhergehenden Bit der Eingangsnachricht, d.h. die Änderung eines einzigen Bit der Eingangsnachricht wirkt sich auf alle nachfolgenden Bit der umgeschlüsselten Ausgangsnachricht aus (Lawineneffekt).

Diesen linearen Zusammenhang, der bei wiederholbaren Umschlüsselprozessen eine Kryptoanalyse ermöglicht, wandelt das Rückkopplungsregister RR in eine nichtlineare Abhängigkeit jedes Ausgangsbits von jedem Eingangsbit des Datenblocks um. Hierzu speichert das Rückkopplungsregister RR den gesamten umgeschlüsselten Datenblock und koppelt ihn, nach Veränderung f(R) der Bitfolge mehrmals (R) zwecks mehrerer Selektierdurchläufe auf den Eingang zurück; mit den oben angeführten Basisparametern z.B. dreimal mit jeweils umgekehrter Bitfolge.

Der damit erhaltene, umgeschlüsselte Datenblock ist analytisch unbrechbar.

Ein Zeitverlust infolge dieser Mehrfachdurchläufe ist vermeidbar, wenn die z.B. drei Selektierdurchläufe in drei einander nachgeordneten Netzspeichern NM erfolgen. Alle Datenblöcke eines Umschlüsselprozesses könnten ohne Zeitverzug mit maximaler Datenrate den Umschlüssler durchlaufen. Die nur einmal zu rechnende Zeitdauer für das Sammeln/ Zwischenspeichern in den Rückkopplungsregistern RR würde sich lediglich auf die Zugriffszeit für die Ausgangsdaten auswirken, nicht aber auf die Datenrate.

Ebenso wären hierfür z.B. drei einander nachgeordnete, völlig autarke Umschlüsseleinrichtungen einsetzbar, da das Verfahren kaskadierbar ist.

Mittels der in Figur 8 dargestellten Ergänzungen Zufallsgenerator RD, Identitätsmerkmal ID, Authentikatorspeicher AM und Register KR1 läßt sich diese Umschlüsseleinrichtung für den verschlüsselten Datenverkehr von Prozeßteilnehmern verwenden, u.a. für die Grundfunktionen:

. Verschlüsselung mit Einmalschlüsseln (one time key),

. Identifizierung von Personen und Nachrichten,

. Autorisation,

. Unsymmetrische Verschlüsselung mittels öffentlicher/geheimer Schlüssel,

. Authentifikation, Elektronische Unterschrift/Elektronische Quittung.

Durch Aneinanderreihung dieser Funktionen lassen sich alle Forderungen einer verschlüsselten Datenkommunikation erfüllen. Nachfolgend werden diese Grundfunktionen für das Blockschaltbild in Figur 8 näher erläutert.

**Verschlüsselter Datenverkehr von Prozeßteilnehmern**

Alle, das Umschlüsseln mittels Verzweigungsgeflechts bestimmenden Schlüssel sind beliebig, z.B. zufallsbedingt, festlegbar.

Diese Eigenschaft ermöglicht die völlig geheime Erzeugung und Zusammensetzung der gesamten Schlüsselinformation ohne aufwendiges Schlüsselmanagement und ihre auch für den Schlüsselbesitzer unbekannte unzugängliche Speicherung, z.B. in extrem miniaturisierten Halbleiterchips.

So können Prozeßteilnehmer A, B, C usw. durch Zusammensetzen von eigenen, verschlüsselt übertragenen, zufälligen Teilschlüsseln A, B, C gemeinsame Schlüssel als Kommunikationsbasis bilden. Mittels Schlüssel-Verschlüsselung lassen sich Schlüssel beliebig vervielfachen, z.B. hierarchisch individualisieren.

Nachfolgend werden Grundfunktionen für den verschlüsselten Datenverkehr von Prozeßteilnehmern näher erläutert:

## Gegenseitige Echtheitsprüfung zweier Umschlüssler

Die Echtheitsprüfung stellt sicher, daß zwei miteinander kommunizierende Umschlüssler A und B gleiche Schlüssel besitzen und damit unverfälscht sind. Ist einer der beiden zweifelsfrei echt, so muß bei positivem Prüfergebnis auch der andere echt sein.

Die Prüfung erfolgt durch gegenseitigen Vergleich der Umschlüsselcharakteristiken mit beliebig vielen, intern mit einem Zufallsgenerator RD erzeugten Zufallsdaten: Zunächst sendet A Zufallsdaten verschlüsselt an B, empfängt dieselben von B entschlüsselten Zufallsdaten und vergleicht sie mit den Ursprungsdaten; anschließend verfährt B ebenso mit A.

Die Zufallsgeneratoren können z.B. Rauschgeneratoren oder asynchron laufende schnelle Zähler sein.

## Datenverschlüsselung zweier Teilnehmer mit gemeinsamen Einmalschlüsseln (one time key)

Zwei Teilnehmer A und B mit gleichen Schlüsseln können unter Ausschluß Dritter mittels gemeinsam erzeugter, zufallsbedingter Einmalschlüssel (one time key) verschlüsselte Daten austauschen. Dabei sind grundsätzlich auch technisch die Funktionen A und B festgelegt.

Diese Funktion ist z.B. für die Bargeldsubstitution anwendbar, die eine völlig systeminterne, autarke, geheime Zufallsschlüsselbildung erfordert.

Den Kommunikationsprozeß leitet eine gegenseitige Echtheitsprüfung ein (siehe oben); sie stellt sicher, daß beide Prozeßteilnehmer echt sind und miteinander kommunizieren können.

Zur Schlüsselbildung erzeugt dann A intern beliebige Zufallsdaten KA, speichert sie in einem Register KR1 und sendet sie verschlüsselt an B, der sie entschlüsselt und ebenfalls im Register KR1 speichert. Anschließend erzeugt B entsprechende Zufallsdaten KB, sendet diese verschlüsselt an A und verknüpft intern diese Zufallsdaten, z.B. mittels EXOR-Funktion, mit dem Inhalt des Registers KR1. A entschlüsselt die Zufallsdaten von B und verknüpft sie nach derselben Funktion mit dem Inhalt seines KR1-Registers.

Damit besitzen beide Teilnehmer im KR1-Register eine gemeinsam gebildete Zufallsinformation, die sie als Schlüssel ins Schlüsselregister KR und/oder in den Netzspeicher NM laden. Diesen Schlüssel besitzen ausschließlich A und B, dritte "echte" Teilnehmer können durch "Mithören" diesen gemeinsamen Schlüssel nicht bilden, da sie in der A- oder B-Funktion jeweils die erste oder die zweite Hälfte des Schlüssels mit eigener Zufallsinformation bilden müßten.

Der auf diese Weise einmal gebildete gemeinsame Zufallsschlüssel ist Quelle einer praktisch unbegrenzten Anzahl von Einmalschlüsseln (one time key): beide Teilnehmer A und B ändern hierzu auf gleiche Weise nach jedem Umschlüsseln eines Datenblocks z.B. ihren Selektierschlüssel im Schlüsselregister. Damit lassen sich Einmalschlüssel für eine praktisch unbegrenzte Betriebszeit erzeugen.

Auch wäre es möglich, als jeweils neuen Schlüssel einen entsprechenden Teil des jeweils zuletzt empfangenen bzw. gesendeten Datenblocks zu verwenden.

Ist die Identität der Teilnehmer A und B nicht zweifelsfrei sicher, z.B. wenn beide keinen Sichtkontakt haben, läßt sich eine "identitätssichere" Kommunikation mit öffentlichen Schlüsseln oder über einen "vertrauenswürdigen Dritten" einleiten (siehe unten). Grundsätzlich unterscheidet der Umschlüssler die Schlüsseldaten von den Nutzdaten: übertragene Schlüssel enthalten verschlüsselt eine Steuerinformation, die sicherstellt, daß die Schlüsselinformation nur intern die Schlüsselregister des Umschlüsslers lädt, auf keinen Fall aber extern ausgeliefert wird.

## Identität und persönliche Zuordnung des Umschlüsslers

Zahlreiche Anwendungsfälle erfordern eine Identität des Umschlüsslers sowie dessen persönliche Zuordnung zum Besitzer bzw. Nutzungsberechtigten. Hierfür kann der Umschlüssler z.B. als Identitätsmerkmal intern eine geheime, individuelle, völlig anonyme Serien- Nr. des Herstellers speichern, die ihn von allen anderen Umschlüsslern eindeutig unterscheidet (z.B. 32 Ziffern lang). Diese interne, geheime Serien-Nr. I ist als Teilnehmerschlüssel in das Schlüsselregister KR und/oder den Netzspeicher NM ladbar, womit der Umschlüssler eine individuelle, unverwechselbare eigene Umschlüsselcharakteristik erhält.

Die persönliche Zuordnung des anonymen Umschlüsslers setzt ein zusätzliches Merkmal voraus. Ein derartiges persönliches Merkmal kann z.B.. eine vom Nutzungsberechtigten selbst ausgedachte beliebige persönliche Identifizier-Nr. (PIN) mit beliebiger Stellenzahl (z.B. 4 bis 16) sein, die bei Benutzung extern eingebbar ist und intern, z.B. mit der geheimen Serien-Nr. I verknüpft, als Teilnehmerschlüssel ins Schlüsselregister KR und/oder den Netzspeicher NM geladen wird. Damit erhält der Umschlüssler eine unverwechselbare umschlüssler- und nutzerindividuelle Umschlüsselcharakteristik.

Diese persönliche Zuordnung erfordert damit kein Einspeichern von Daten oder sonstige Veränderungen des Umschlüsslers, da die PIN jeweils nur bei Benutzung eingegeben wird (siehe Autorisation). Daher läßt sich derselbe Umschlüssler von mehreren Nutzungsberechtigten für unterschiedliche Anwendungen persönlich zuordnen. Auch ist die verknüpfte Zuordnung mehrerer Benutzer möglich, d.h. nur die in richtiger Reihenfolge eingegebenen PIN mehrerer Benutzer reproduzieren eine spezifische, unverwechselbare Umschlüsselcharakteristik.

**Autorisation**

Autorisation ist die "Zulassung zu einem Teilprozeß", z.B. die von einer Bank oder einem Kreditkarteninstitut erteilte Zulassung des Umschlüsslers als "Geldbörse" zum Zahlungsaustausch mit gleich autorisierten "Geldbörsen".

Der Umschlüssler ermöglicht ohne Einspeichern zusätzlicher Daten oder sonstiger Veränderungen, d.h. in einer einmal hergestellten, unveränderbaren Ausführung die Autorisation für beliebig viele "Teilprozesse", d.h. völlig unabhängig voneinander, ohne Absprache, können beliebig viele Institutionen denselben Umschlüssler für ihre spezifische Anwendung autorisieren. Ebenso wie biometrische Erkennungsmerkmale als unveränderbar vorgegeben anzusehen sind, kann auch der Umschlüssler als unveränderbar vorgegeben gelten.

Der Autorisation gehen die Schritte "Echtheitsprüfung" und "Bildung gemeinsamer zufälliger Einmalschlüssel" voraus.

Mittels eines Umschlüsslers, dessen Echtheit zweifelsfrei feststeht, bildet der Autorisierende mit diesen Schritten die Basis für einen auch ihm selbst völlig geheimen, verschlüsselten Datenaustausch mit dem zu autorisierenden Teilnehmer. Dieser Datenaustausch kann auch über öffentliche Kommunikationswege erfolgen.

Das Autorisieren besteht nun darin, dem Teilnehmer die Bildung eines geheimen, allen Autorisierten gemeinsamen Prozeßschlüssels P zu ermöglichen, der alle für den Teilprozeß Autorisierten ausweist.

Hierzu empfängt der neue Teilnehmer den verschlüsselten geheimen Prozeßschlüssel P und verschlüsselt ihn mit seinem individuellen Teilnehmerschlüssel I, gegebenenfalls durch eine oder mehrere PIN personifiziert, in einen teilnehmerbezogenen Prozeßschlüssel AN um, den er sich als Zugangsschlüssel zu dem betreffenden Teilprozeß merken muß.

Sein Umschlüssler verschafft ihm bei Eingabe seines individuellen Prozeßschlüssels AN Zugang zum Prozeß, indem er ihn intern mittels seines Teilnehmerschlüssels in den gemeinsamen geheimen Prozeßschlüssel P entschlüsselt und P in das Schlüsselregister KR und/oder den Netzspeicher NM lädt.

Mit diesem, allen Autorisierten gemeinsamen, prozeßindividuellen Prozeßschlüssel P ist er mittels Echtheitsprüfung (siehe oben) von allen Autorisierten als autorisiert erkennbar und kann, auf diesem Prozeßschlüssel aufbauend, mit anderen Autorisierten verschlüsselt kommunizieren, gegebenenfalls unter Erzeugung von Einmalschlüsseln für ausschließlich zweiseitige Kommunikation (siehe oben).

Die beschriebene Autorisation, die in gegenseitiger Absprache ebenso zwischen nur zwei Kommunikationspartnern möglich ist, eröffnet die Möglichkeit, öffentliche Schlüssel zu bilden und öffentlich zu versenden (siehe unten).

Wurde der Teilnehmerschlüssel für das Autorisieren mittels einer oder mehrerer PIN personifiziert, so ist der teilnehmerbezogene Prozeßschlüssel AN nur in Verbindung mit dieser PIN verwendbar. Dies hat den Vorteil, daß sich der Benutzer z.B. für beliebig viele Autorisationen nur eine einzige PIN geheim merken muß und sich die beliebig vielen AN offen zugänglich notieren kann; AN ist damit zu einer PAN geworden (Persönliche Autorisier-Nummer). Das Notieren dieser PAN kann auch in einem offen geführten, zusätzlichen Speicher erfolgen; z.B. assoziativ dem Namen des Prozesses zugeordnet.

Mittels unterschiedlicher PIN und damit unterschiedlicher PAN läßt sich z.B. eine "elektronische Geldbörse" für denselben Prozeß vom gleichen Autorisierer auch für mehrere Benutzer autorisieren.

Auch ist es möglich, dieselbe "Geldbörse" vom gleichen Herausgeber mehrfach, d.h. für unterschiedliche Teilprozesse zu autorisieren; z.B. lassen sich auf diese Weise mittels unterschiedlicher Prozeßschlüssel P Autorisierungen für Serviceleistungen oder für bestimmte Geldbetragsgrenzen erteilen, die z.B. in Verbindung mit unterschiedlichen PIN unterschiedlichen Benutzern erteilt werden; ebenso läßt sich eine Trennung z.B. von "Privatgeld" und "Geschäftsgeld" bei z.B. gleicher PIN erreichen.

**Bildung unsymmetrischer öffentlicher Schlüssel; Identifizierung**

Öffentliche Schlüssel sind "unsymmetrisch"; sie sind jedem zugänglich, ermöglichen aber nur jeweils eine Umschlüsselrichtung, d.h. sie sind entweder Sendeschlüssel für Verschlüsseln oder Empfangsschlüssel für

EP 0 458 210 B1

Entschlüsseln. Die Schlüssel für die jeweils andere Umschlüsselrichtung sind ausschließlich im Besitz der Berechtigten, d.h. sie sind an eine bestimmte Identität gebunden. Ein Berechtigter kann sich damit durch den Besitz des geheimen Sende- oder Empfangsschlüssels anderen gegenüber zweifelsfrei als Sender oder Empfänger einer Nachricht identifizieren.

Unsymmetrische Schlüssel für nur eine vorgegebene Umschlüsselrichtung lassen sich aus symmetrischen Schlüsseln bilden, indem diese z.B. verknüpft mit einer Steuerinformation für die zu sperrende Umschlüsselrichtung verschlüsselt werden. Diese Steuerinformation ist der Parameter C, der zusammen mit anderen Parametern verschlüsselt übertragen wird.

Schlüssel werden grundsätzlich verschlüsselt übertragen; sie sind durch eine Steuerinformation als Schlüssel kenntlich, die beim Empfang ausschließlich das interne Laden des Schlüsselregisters und/oder des Netzspeichers ermöglicht; die externe Ausgabe der entschlüsselten Schlüsselinformationen ist nicht möglich.

Teilnehmer mit gleicher Umschlüsselcharakteristik, z.B. gleich autorisierte Teilnehmer (siehe oben) können für den Teilnehmerkreis offen zugängliche "öffentliche" Schlüssel bilden. Diese Schlüsselbildung erfolgt mittels einer Autorisierprozedur:

Der Teilnehmer verschlüsselt einen gemeinsamen, öffentlichen Prozeß-Sendeschlüssel P1 bzw. Prozeß-Empfangsschlüssel P2 mittels seines Teilnehmerschlüssels I in einen teilnehmerbezogenen symmetrischen, geheimen Schlüssel I1 bzw. I2.

Aus diesen symmetrischen, geheimen Schlüsseln I1 bzw. I2 leitet der Teilnehmer durch Verknüpfung mit einer Sende- bzw. Empfangs-Steuerinformation (Parameter C) seine unsymmetrischen, individuellen Sende- bzw. Empfangsschlüssel ab, die mittels eines allen Prozeßteilnehmern verfügbaren geheimen Schlüssels (z.B. P) in seine öffentlichen Sende- bzw. Empfangsschlüssel AN1 bzw. AN2 verschlüsselt werden.

Diese öffentlichen Schlüssel lassen sich wie ein Telefonbuch öffentlich führen, auch z.B. den verschlüsselten Nachrichten beifügen.

Zur Kommunikation mittels eines öffentlichen Schlüssels eines anderen Teilnehmers verschafft sich ein Teilnehmer zunächst mittels seines eigenen Prozeßschlüssels AN Zugang zum Prozeß, d.h. den gemeinsamen geheimen Prozeßschlüssel P, der ihm dann die öffentlichen Sende- bzw. Empfangsschlüssel AN1 bzw. AN2 entschlüsselt und ins Schlüsselregister bzw. in den Netzspeicher lädt.

Der jeweils berechtigte Teilnehmer lädt seinen individuellen geheimen Empfangs- bzw. Sendeschlüssel I1 bzw. I2 durch Eingabe des gemeinsamen, öffentlichen Sendeschlüssels P1 bzw. Empfangsschlüssels P2 und Umschlüsseln mittels seines Teilnehmerschlüssels I. Die "Öffentlichkeit" dieser gemeinsamen Sende- bzw. Empfangsschlüssel ermöglicht das Laden der geheimen Schlüssel I1 bzw. I2 mittels dieser offenen Schlüssel beim Berechtigten auch vom Kommunikationspartner aus.

Die Schlüssel I1 bzw. I2 bleiben geheim, da sie nur intern im Umschlüssler des Berechtigten mittels dessen Teilnehmerschlüssels reproduzierbar sind.

Diese öffentlichen Sende- und Empfangsschlüssel ermöglichen jede gewünschte Form der Identifizierung:

. Ein Teilnehmer A sendet, sich identifizierend, mit seinem geheimen Schlüssel und ist von allen Teilnehmern mittels des öffentlichen Schlüssels identifizierbar,

. Ein Teilnehmer A empfängt von beliebigen anderen Teilnehmern mit öffentlichem Schlüssel verschlüsselte Nachrichten, die nur er, sich damit identifizierend, entschlüsseln kann.


**Authentifikation, Elektronische Unterschrift, Elektronische Quittung**

Die Authentifikation soll den Nachweis für die Unverfälschtheit und Vollständigkeit einer Nachricht liefern.

Hierzu wird aus dem Sendetext eine Vergleichsgröße (Authentikator) abgeleitet, und dem Text beigefügt, die dem Sendetext eindeutig zugeordnet ist, d.h. dessen Identität zweifelsfrei ausweist. Diese Vergleichgröße muß vom Empfänger aus dem Text nachvollziehbar sein und ermöglicht damit durch Vergleich mit dem mitgelieferten Authentikator den Nachweis auf Unverfälschtheit und Vollständigkeit der Nachricht.

Das beschriebene Umschlüsselverfahren erzeugt mit wenig Aufwand zugleich mit der Datenverschlüsselung einen fälschungssicher zugeordneten Authentikator:

Hierzu ist jedem Knoten oder einer Knotengruppe des Verzweigungsgeflechts in einem Register oder Speicher AM ein Kennbit zur Bildung einer Basisinformation für den Authentikator zugeordnet, d.h. dieser Speicher wird wie das Verzweigungsgeflecht mit der jeweils ausgewählten Zieladresse NADR adressiert. Zu Beginn eines Datenverschlüsselungsprozesses ist dieser Speicher AM mit einer definierten Kenninformation (z.B. 000---0) ladbar.

Im Verlauf der Verschlüsselung, die sich über mehrere Datenblöcke erstrecken kann, bewirkt jeder aufgerufene Knoten eine Invertierung seines Kennbits, so daß mit Ende der Nachricht im Speicher AM eine text- und verschlüsselungsindividuelle Kennung als Basis zur Bildung des Authentikators verfügbar ist. Diese Kennung von z.B. n Bit für ein Verzweigungsgeflecht mit n Knoten wird entweder direkt oder reduziert durch Verknüpfung/Faltung dem Text als Authentikator hinzugefügt, ebenfalls mit dem Sendeschlüssel verschlüsselt.

Jeder Empfänger, der im Besitz des Empfangsschlüssels ist, reproduziert im Verlauf der Entschlüsselung, die dieselben Knoten des Verzweigungsgeflechts durchläuft, diesen Authentikator und erhält durch Vergleich mit dem empfangenen Authentikator den Nachweis für Unverfälschtheit und Vollständigkeit der Nachricht.

Ist der Sendeschlüssel geheim und an eine bestimmte Identität gebunden, entspricht das Authentifikat der "Elektronischen Unterschrift", da seine Herkunft damit zweifelsfrei feststeht und vom Verursacher nicht geleugnet werden kann. Als Authentikator kann dann auch eine "sinnvolle" Unterschrift übertragen werden, z.B. Name, Anschrift, Unterschriftsort, Datum etc. Für diesen Fall lädt der Sender der Nachricht die Kennung AM in das Schlüsselregister KR und verschlüsselt mit diesem sender- und textindividuellen Schlüssel diese "sinnvolle" Unterschrift und fügt sie wie oben als Authentikator an den Text.

Der Empfänger bildet ebenso mittels des Textes den in das Schlüsselregister KR zu ladenden Schlüssel zur Entschlüsselung der Unterschrift. Diese Lösung ermöglicht ein stets gleichbleibendes Aussehen der Unterschrift.

Die Elektronische Unterschrift und Authentifikation sind nicht an das Verschlüsseln des Sendetextes gebunden. Auch Klartexte sind mittels der beschriebenen Verschlüsselung elektronisch unterschreibbar und authentifizierbar, indem der Sender mittels des Verschlüsselungsprozesses das Authentikat zum Klartext bildet, und dieses verschlüsselt als zugeordnete Unterschrift an den Empfänger sendet; gegebenenfalls zusammen mit seinem zugehörigen öffentlichen Schlüssel.

Ebenso wie die Elektronische Unterschrift einer Sendung ist auch die Elektronische Quittierung eines Empfangs authentifizierbar:

Der Empfänger verwendet die für den erhaltenen Text gebildete Kennung AM bzw. führt diese mit dem bestätigenden Text weiter, bildet mit ihr wie oben beschrieben einen Authentikator über Text und Bestätigung und sendet diesen mit eigenem geheimen Sendeschlüssel verschlüsselt an den Kommunikationspartner als Quittung; gegebenenfalls zusammen mit seinem zugehörigen öffentlichen Schlüssel. Ebenso wie die empfangene Unterschrift ist diese Quittung vom Verursacher nicht zu leugnen. Wie oben beschrieben, läßt sich auch hier als Authentikator eine sinnvolle Unterschrift verwenden.

Anwendung des Verfahrens

Das Verfahren ermöglicht wie oben beschrieben multifunktionale, kostengünstige Umschlüsseleinrichtungen, die als Mikrochip bei äußerst geringer Chipfläche alle kryptographischen Funktionen bei praktisch unbegrenzter Schlüsselanzahl bieten; dies bei extrem hohen Datenraten, da dieses Verfahren nicht aufwendige Rechenoperationen sondern Speicheroperationen verwendet.

Für die Nachrichtenübertragung sind diese Umschlüsseleinrichtungen als Zufallsgeneratoren mit praktisch unbegrenzter Periodizität einsetzbar; sie ermöglichen unbrechbare Verschlüsselungen mit Einmalschlüsseln (one time key) bei unbegrenztem, d.h. lebenslänglichem Schlüsselvorrat.

Die z.Zt. wohl breitesten Anwendungsfelder bieten die "Elektronischen Bank- und Zahlungsdienste", die "Telekommunikationsdienste" und die "Elektronische Zugangs- und Datensicherung".

Diesen Anwendungsfeldern gemeinsam ist der Problemkreis "Autorisierung", "Identifizierung", "Authentifizierung" und "Verschlüsselung" von Identitäten und Nachrichten. Einrichtungen nach dem beschriebenen Verfahren bieten sich diesem Problemkreis als multifunktionale, allen Anwendungen gemeinsame technische Lösung an.

So läßt sich z.B. die Umschlüsseleinrichtung mit einem Saldier- und Speichermittel für bargeldwerte Beträge zu einer autorisierten "Elektronischen Geldbörse" für "authentifizierbares Geld" verbinden, die völlig autark und geheim verschlüsselt bargeldwerte Beträge mit gleich autorisierten Geldbörsen austauschen kann.

Von besonderem Vorteil ist die Realisierbarkeit als Festwertspeicher, d.h. diese Umschlüsseleinrichtungen lassen sich als unveränderbare Mikrochips herstellen, deren Informationsinhalt von Herstellung an unverändert bleibt, d.h. in die während der gesamten, praktisch unbegrenzten Lebensdauer keinerlei bleibende Informationen einzuschreiben sind.

Das konzipierte Verfahren ist auch als Software-/Firmware-Lösung einsetzbar.

**Patentansprüche**

1.  Verfahren zur Nachrichtenumschlüsselung einer Eingangsnachricht in eine Ausgangsnachricht mittels eines Verzweigungsgeflechtes aus miteinander vernetzten Knoten,
    **gekennzeichnet durch**

- Zuordnung einer Adresse und Zuordnung einer Schlüsselinformation (K, A1) zu jedem Knoten des Verzweigungsgeflechtes,
- Erzeugung von Zieladressgruppen zur Verbindung eines jeden Knotens als Quellknoten mit einer Gruppe dieser Knoten als Zielknoten, wobei eine erste Zieladresse (A0) jeder Zieladressgruppe die Knoten zu einer Knotenkette verbindet und wobei mindestens eine zweite Zieladresse (A1) jeder Zieladressgruppe diese Knotenkette zu dem Verzweigungsgeflecht vernetzt,
- schrittweise Selektierung von Zielknoten und zugeordneter Schlüsselinformation (K, A1) in einem Selektierlauf, wobei jeder Selektierschritt, abhängig von einem anstehenden Zeichen der Eingangsnachricht, mindestens eine Zieladresse (A0, A1) aus einer anstehenden Zieladressgruppe selektiert und
- Bildung der umgeschlüsselten Ausgangsnachricht in Abhängigkeit von der selektierten Schlüsselinformation (K, A1).

2. Verfahren nach Anspruch 1,
**gekennzeichnet durch**
- Erzeugung der Zieladressgruppe in Abhängigkeit von der selektierten Schlüsselinformation (K, A1) eines vorhergehenden Selektierschrittes.

3. Verfahren nach Anspruch 1,
**gekennzeichnet durch**
- Erzeugung der Zieladressgruppe in Abhängigkeit von einer Zieladresse (A0, A1) eines vorhergehenden Selektierschrittes.

4. Verfahren nach Anspruch 1,
**gekennzeichnet durch**
- Zählen der Selektierschritte und Erzeugen der Zieladressgruppe in Abhängigkeit von der Zählnummer eines Selektierschrittes.

5. Verfahren nach Anspruch 4,
**gekennzeichnet durch**
- Erzeugen der Zieladressgruppe mittels Adress-Schrittes aus einer vorhergehenden Zieladresse heraus, wobei die Schrittweite eins beträgt für die erste Zieladresse (A0) und $2^{A-s}$ beträgt für die zweite Zieladresse (A1) und worin s die Zählnummer des Selektierschrittes ist und der Wert A von der Anzahl $2^A$ der Knoten begrenzt wird.

6. Verfahren nach Anspruch 1,
**gekennzeichnet durch**
- Erzeugung der Zieladressgruppen und/oder der Schlüsselinformation (K, A1) mittels Zufallsereignisse eines Zufallsverfahrens.

7. Verfahren nach Anspruch 1,
**gekennzeichnet durch**
- Erzeugen der Zieladressgruppe mittels Adress-Schrittes aus einer vorhergehenden Zieladresse heraus, wobei der Selektierlauf aus einer Zieladresse $A_s$ heraus beginnt und wobei allen Knoten für die erste Zieladresse (A0) die Schrittweite plus eins zugeordnet wird und wobei für die zweite Zieladresse (A1) dem Knoten $A_s+2$ die Schrittweite minus eins und allen anderen Knoten die Schrittweite plus zwei zugeordnet wird.

8. Verfahren nach einem oder mehreren der Ansprüche 1 bis 7,
**gekennzeichnet durch**
- Festlegung eines Selektierschlüssels für die Selektierung der Zieladresse (A0, A1), der mindestens ein Zeichen einer beliebigen Information als Selektierzeichen enthält,
- Zuordnung dieses Selektierzeichens zu mindestens einem Zeichen der Eingangsnachricht und
- Verknüpfung eines anstehenden Zeichens der Eingangsnachricht mit dem zugeordneten Selektierzeichen für die Selektierung der Zieladresse (A0, A1).

9. Verfahren nach einem oder mehreren der Ansprüche 1 bis 8,
**gekennzeichnet durch**
- Festlegung eines Authentikatorschlüssels für die Bildung eines Authentikators, der mindestens ein Schlüsselzeichen einer beliebigen Information enthält,
- Zuordnung dieses Schlüsselzeichens zu mindestens einem Knoten des Verzweigungsgeflechtes,
- Änderung dieser zugeordneten Schlüsselzeichen durch den Selektierlauf mit Selektierung der jeweils zugeordneten Knoten und
- Bildung eines Authentikators in Abhängigkeit von diesem geänderten Authentikatorschlüssel.

10. Verfahren zur Nachrichtenumschlüsselung in einer Schlüsseleinheit, wobei Eingangsnachrichten mittels Selektierläufe durch ein Verzweigungsgeflecht aus miteinander vernetzten Knoten die diesen Knoten zugeordneten Schlüsselinformationen (K, A1) für die Umschlüsselung in eine Ausgangsnachricht selektieren,
**gekennzeichnet durch**
- Festlegung dieser Schlüsselinformation (K, A1) und einer Steuerinformation für einen Umschlüsselprozeß durch mindestens einen Schlüssel,
- Teilung dieses Umschlüsselprozesses in mindestens eine Umschlüsselprozedur und entsprechende Aufteilung dieser Schlüsselinformation (K, A1) in zugeordnete Prozedurschlüssel, wobei in einer Umschlüsselprozedur ein Zeichen einer umgeschlüsselten Prozeß-Ausgangsnachricht gebildet wird,
- Teilung der Umschlüsselprozedur in mindestens zwei Selektierläufe und entsprechende Aufteilung des Prozedurschlüssels in zugeordnete Teilschlüssel,
- Umschlüsselung einer Prozedur-Eingangsnachricht in eine Prozedur-Ausgangsnachricht zur Bildung des Zeichens der Prozeß-Ausgangsnachricht in mindestens zwei Selektierläufen mittels der zugeordneten Teilschlüssel, wobei eine Eingangsnachricht für einen nächsten Selektierlauf abgeleitet wird aus einer umgeschlüsselten Ausgangsnachricht eines vorhergehenden Selektierlaufes mit einer individuell veränderten Zeichenfolge und
- Umschlüsselung einer Prozeß-Eingangsnachricht in die Prozeß-Ausgangsnachricht in mindestens einer Prozedur mittels der zugeordneten Prozedurschlüssel, wobei die Prozedur-Eingangsnachricht für eine nächste Prozedur abgeleitet wird aus der Prozedur-Ausgangsnachricht einer vorhergehenden Prozedur und wobei sich die Prozeß-Ausgangsnachricht aus den in den Prozeduren gebildeten Zeichen ergibt.

11. Verfahren nach Anspruch 10,
**gekennzeichnet durch**
- gegenseitige Prüfung zweier solcher Schlüsseleinheiten auf Schlüsselgleichheit, wobei in einem ersten Prüfschritt die erste Schlüsseleinheit ihre eigene von ihr und der zweiten Schlüsseleinheit gleich umgeschlüsselte Prüfinformation auf Gleichheit überprüft
und wobei in einem zweiten Prüfschritt die zweite Schlüsseleinheit ihre eigene von ihr und der ersten Schlüsseleinheit gleich umgeschlüsselte Prüfinformation auf Gleichheit überprüft.

12. Verfahren nach Anspruch 10 oder 11,
**gekennzeichnet durch**
- gemeinsame Erzeugung eines gemeinsamen Schlüssels K durch zwei solcher Schlüsseleinheiten, wobei die erste Schlüsseleinheit einen eigenen beliebigen Schlüssel KA mittels einer Verknüpfungsregel A mit einem empfangenen Schlüssel KB zum gemeinsamen Schlüssel K verknüpft und wobei die zweite Schlüsseleinheit einen eigenen beliebigen Schlüssel KB mittels einer Verknüpfungsregel B mit einem empfangenen Schlüssel KA zum gemeinsamen Schlüssel K verknüpft.

13. Verfahren nach einem oder mehreren der Ansprüche 10 bis 12,
**gekennzeichnet durch**
- Benutzung der Schlüsseleinheit als ein Teilnehmer an mindestens einem Prozeß, wobei dieser Schlüsseleinheit mindestens ein Teilnehmerschlüssel I zur Identifizierung zugeordnet wird,
- Zuordnung mindestens eines Benutzerschlüssels PIN1 zu mindestens einem Benutzer dieser Schlüsseleinheit und Autorisierung dieses Benutzers für diese Schlüsseleinheit durch Verschlüsselung des Teilnehmerschlüssels I mittels des Benutzerschlüssels PIN1 in einen Benutzer-Teilnehmerschlüssel ID1 und
- Identifizierung dieses autorisierten Benutzers für den Prozeß durch Entschlüsselung dieses Schlüssels ID1 mittels des Benutzerschlüssels PIN1 in den Teilnehmerschlüssel I, wobei diese Verschlüsselung und Entschlüsselung innerhalb dieser Schlüsseleinheit erfolgen.

14. Verfahren nach einem oder mehreren der Ansprüche 10 bis 13,

**gekennzeichnet durch**

- Teilnahme der Schlüsseleinheit an mindestens einem Prozeß, wobei dieser Schlüsseleinheit mindestens ein Teilnehmerschlüssel I zur Identifizierung zugeordnet wird,
- Zuordnung mindestens eines Prozeßschlüssels P zu diesem Prozeß und Autorisierung der Schlüsseleinheit für diesen Prozeß durch Verschlüsselung des Prozeßschlüssels P mittels des Teilnehmerschlüssels I in einen Teilnehmer-Prozeßschlüssel AN und
- Identifizierung dieser autorisierten Schlüsseleinheit für den Prozeß durch Entschlüsselung dieses Schlüssels AN mittels des Teilnehmerschlüssels I in den Prozeßschlüssel P, wobei diese Verschlüsselung und Entschlüsselung innerhalb dieser Schlüsseleinheit erfolgen.

15. Verfahren nach Anspruch 14,
**gekennzeichnet durch**

- Zuordnung eines individuellen Schlüssels Io zu dieser Schlüsseleinheit, den jede gleich autorisierte Schlüsseleinheit benutzen darf,
- Autorisierung des Prozesses für diesen individuellen Schlüssel Io durch Verschlüsselung dieses Schlüssels Io mittels des Prozeßschlüssels P in einen Prozeßteilnehmerschlüssel ANo innerhalb dieser Schlüsseleinheit und
- Zugriff dieses autorisierten Prozesses zum individuellen Schlüssel Io durch Entschlüsselung dieses Schlüssels ANo mittels des Prozeßschlüssels P in den individuellen Schlüssel Io, wobei dieser Zugriff innerhalb jeder für diesen Prozeß autorisierten Schlüsseleinheit erfolgen kann.

16. Verfahren nach Anspruch 15,
**gekennzeichnet durch**

- Verknüpfung des Teilnehmerschlüssels Io mit einer Steuerinformation, die ihn auf nur eine Umschlüsselrichtung beschränkt, entweder auf das Verschlüsseln oder auf das Entschlüsseln.

17. Vorrichtung zur Nachrichtenumschlüsselung einer Eingangsnachricht (DIN) in eine Ausgangsnachricht (DOUT) mittels eines Verzweigungsgeflechtes aus miteinander vernetzten Speicherplätzen (NM) als Knoten,
**gekennzeichnet durch**

- Speicherplätze (NM) als Knoten, denen eine Adresse und eine Schlüsselinformation (K, A1) zugeordnet wird,
- Mittel für die Erzeugung von Zieladressgruppen zur Verbindung eines jeden Speicherplatzes als Quellknoten mit einer Gruppe dieser Speicherplätze als Zielknoten, wobei eine erste Zieladresse (A0) jeder Zieladressgruppe die Speicherplätze zu einer Speicherplatzkette verbindet und wobei mindestens eine zweite Zieladresse (A1) jeder Zieladressgruppe diese Speicherplatzkette zu dem Verzweigungsgeflecht vernetzt,
- Mittel (AS) für eine schrittweise Selektierung von Zielknoten und zugeordneter Schlüsselinformation (K, A1) in einem Selektierlauf, wobei jeder Selektierschritt, abhängig von einem anstehenden Zeichen der Eingangsnachricht, mindestens eine Zieladresse (A0, A1) aus einer anstehenden Zieladressgruppe selektiert und
- Mittel (DS) zur Bildung der umgeschlüsselten Ausgangsnachricht (DOUT) in Abhängigkeit von der selektierten Schlüsselinformation (K, A1).

18. Vorrichtung nach Anspruch 17,
**gekennzeichnet durch**

- Mittel für die Erzeugung der Zieladressgruppe in Abhängigkeit von der selektierten Schlüsselinformation (K, A1) eines vorhergehenden Selektierschrittes.

19. Vorrichtung nach Anspruch 17,
**gekennzeichnet durch**

- Mittel für die Erzeugung der Zieladressgruppe in Abhängigkeit von einer Zieladresse (A0, A1) eines vorhergehenden Selektierschrittes.

20. Vorrichtung nach Anspruch 17,
**gekennzeichnet durch**

- Mittel zum Zählen der Selektierschritte und zum Erzeugen der Zieladressgruppe in Abhängigkeit von der Zählnummer eines Selektierschrittes.

21. Vorrichtung nach Anspruch 20,
**gekennzeichnet durch**
- Mittel zum Erzeugen der Zieladressgruppe mittels Adress-Schrittes aus einer vorhergehenden Zieladresse heraus, wobei die Schrittweite eins beträgt für die erste Zieladresse (A0) und $2^{A-s}$ beträgt für die zweite Zieladresse (A1) und worin s die Zählnummer des Selektierschrittes ist und der Wert A von der Anzahl $2^A$ der Knoten begrenzt wird.

22. Vorrichtung nach Anspruch 17,
**gekennzeichnet durch**
- Mittel für die Erzeugung der Zieladressgruppe und/oder der Schlüsselinformation (K, A1) in Abhängigkeit von Zufallsereignissen eines Zufallsverfahrens.

23. Vorrichtung nach einem oder mehreren der Ansprüche 17 bis 22,
**gekennzeichnet durch**
- Mittel für eine gleichzeitige Ausführung einer Mehrzahl von Selektierschritten durch gleichzeitigen Zugriff auf eine Mehrzahl über Zieladressen miteinander verketteter Speicherplätze, für die eine Mehrzahl von Zieladressgruppen erzeugt wird,
wobei eine Mehrzahl anstehender Zeichen der Eingangsnachricht (DIN) durch Verknüpfung mit dieser Mehrzahl von Zieladressgruppen eine Mehrzahl von Speicherplätzen und zugeordneter Schlüsselinformation (K, A1) selektiert.

24. Vorrichtung nach einem oder mehreren der Ansprüche 17 bis 23,
**gekennzeichnet durch**
- Mittel (AS), die für die Selektierung der Zieladresse (A0, A1) ein anstehendes Zeichen der Eingangsnachricht (DIN) mit einem zugeordneten Selektierzeichen eines Selektierschlüssels (S) verknüpfen.

25. Vorrichtung nach einem oder mehreren der Ansprüche 17 bis 24,
**gekennzeichnet durch**
- Mittel (AM), die den Speicherplätzen (NM) des Verzweigungsgeflechtes zugeordnete Schlüsselzeichen eines Authentikatorschlüssels mit Selektierung dieser zugeordneten Speicherplätze beim Selektierlauf ändern, wobei in Abhängigkeit von diesem geänderten Authentikatorschlüssel nach Beendigung mindestens eines Selektierlaufes ein Authentikator gebildet wird.

26. Vorrichtung zur Nachrichtenumschlüsselung, in der Eingangsnachrichten (DIN) mittels Selektierläufe durch ein Verzweigungsgeflecht aus miteinander vernetzten Speicherplätzen (NM) die diesen Speicherplätzen (NM) zugeordneten Schlüsselinformationen (K, A1) für die Umschlüsselung in eine Ausgangsnachricht (DOUT) selektieren,
**gekennzeichnet durch**
 - Mittel zur Festlegung dieser Schlüsselinformation (K, A1) und einer Steuerinformation für einen Umschlüsselprozeß durch mindestens einen Schlüssel,
 - Mittel zur Teilung dieses Umschlüsselprozesses in mindestens eine Umschlüsselprozedur und entsprechende Aufteilung dieser Schlüsselinformation (K, A1) in zugeordnete Prozedurschlüssel, wobei in einer Umschlüsselprozedur ein Zeichen einer umgeschlüsselten Prozeß-Ausgangsnachricht (DOUT) gebildet wird,
 - Mittel zur Teilung der Umschlüsselprozedur in mindestens zwei Selektierläufe und entsprechende Aufteilung des Prozedurschlüssels in zugeordnete Teilschlüssel,
 - Mittel zur Steuerung dieser Umschlüsselprozedur für die Umschlüsselung einer Prozedur-Eingangsnachricht in eine Prozedur-Ausgangsnachricht zur Bildung des Zeichens der Prozeß-Ausgangsnachricht (DOUT) in mindestens zwei Selektierläufen mittels der zugeordneten Teilschlüssel, wobei eine Eingangsnachricht für einen nächsten Selektierlauf abgeleitet wird aus einer umgeschlüsselten Ausgangsnachricht eines vorhergehenden Selektierlaufes mit einer individuell veränderten Zeichenfolge und
 - Mittel zur Steuerung des Umschlüsselprozesses für die Umschlüsselung einer Prozeß-Eingangsnachricht (DIN) in die Prozeß-Ausgangsnachricht (DOUT) in mindestens einer Prozedur mittels der zugeordneten Prozedurschlüssel, wobei die Prozedur-Eingangsnachricht für eine nächste Prozedur abgeleitet wird aus der Prozedur-Ausgangsnachricht einer vorhergehenden Prozedur und wobei sich die Prozeß-Ausgangsnachricht (DOUT) aus den in den Prozeduren gebildeten Zeichen ergibt.

27. Vorrichtung nach Anspruch 26,

EP 0 458 210 B1

gekennzeichnet durch
- Mittel für die gegenseitige Prüfung zweier solcher Vorrichtungen auf Schlüsselgleichheit, wobei in einem ersten Prüfschritt die erste Vorrichtung ihre eigene von ihr und der zweiten Vorrichtung gleich umgeschlüsselte Prüfinformation auf Gleichheit überprüft und wobei in einem zweiten Prüfschritt die zweite Vorrichtung ihre eigene von ihr und der ersten Vorrichtung gleich umgeschlüsselte Prüfinformation auf Gleichheit überprüft.

28. Vorrichtung nach Anspruch 26 oder 27,
gekennzeichnet durch
- Mittel für eine gemeinsame Erzeugung eines gemeinsamen Schlüssels K durch zwei solcher Vorrichtungen, wobei die erste Vorrichtung einen eigenen beliebigen Schlüssel KA mittels einer Verknüpfungsregel A mit einem empfangenen Schlüssel KB zum gemeinsamen Schlüssel K verknüpft und wobei die zweite Vorrichtung einen eigenen beliebigen Schlüssel KB mittels einer Verknüpfungsregel B mit einem empfangenen Schlüssel KA zum gemeinsamen Schlüssel K verknüpft.

29. Vorrichtung nach einem oder mehreren der Ansprüche 26 bis 28,
gekennzeichnet durch
die Benutzung als ein Teilnehmer an mindestens einem Prozeß,
   - Mittel (ID) für eine Zuordnung mindestens eines Teilnehmerschlüssels I zu dieser Vorrichtung zur Identifizierung dieser Vorrichtung für diesen Prozeß,
   - Mittel zur Zuordnung mindestens eines Benutzerschlüssels PIN1 zu mindestens einem Benutzer dieser Vorrichtung und zur Autorisierung dieses Benutzers für diese Vorrichtung durch Verschlüsselung des Teilnehmerschlüssels I mittels des Benutzerschlüssels PIN1 in einen Benutzer-Teilnehmerschlüssel ID1 und
   - Mittel zur Identifizierung dieses autorisierten Benutzers für den Prozeß durch Entschlüsselung dieses Schlüssels ID1 mittels des Benutzerschlüssels PIN1 in den Teilnehmerschlüssel I, wobei diese Verschlüsselung und Entschlüsselung innerhalb dieser Vorrichtung erfolgen.

30. Vorrichtung nach einem oder mehreren der Ansprüche 26 bis 29,
gekennzeichnet durch
die Teilnahme an mindestens einem Prozeß,
   - Mittel (ID) für eine Zuordnung mindestens eines Teilnehmerschlüssels I zu dieser Vorrichtung zur Identifizierung dieser Vorrichtung für diesen Prozeß,
   - Mittel zur Zuordnung mindestens eines Prozeßschlüssels P zu diesem Prozeß und zur Autorisierung dieser Vorrichtung für diesen Prozeß durch Verschlüsselung des Prozeßschlüssels P mittels des Teilnehmerschlüssels I in einen Teilnehmer-Prozeßschlüssel AN und
   - Mittel zur Identifizierung dieser autorisierten Vorrichtung für diesen Prozeß durch Entschlüsselung dieses Schlüssels AN mittels des Teilnehmerschlüssels I in den Prozeßschlüssel P, wobei diese Verschlüsselung und Entschlüsselung innerhalb dieser Vorrichtung erfolgen.

31. Vorrichtung nach Anspruch 30,
gekennzeichnet durch
   - Mittel (ID) für eine Zuordnung eines individuellen Schlüssels Io zu dieser Vorrichtung, den jede gleich autorisierte Vorrichtung benutzen darf,
   - Mittel zur Autorisierung des Prozesses für diesen individuellen Schlüssel Io durch Verschlüsselung dieses Schlüssels Io mittels des Prozeßschlüssels P in einen Prozeßteilnehmerschlüssel ANo innerhalb dieser Vorrichtung und
   - Mittel für einen Zugriff dieses autorisierten Prozesses zum individuellen Schlüssel Io durch Entschlüsselung dieses Schlüssels ANo mittels des Prozeßschlüssels P in den individuellen Schlüssel Io, wobei dieser Zugriff innerhalb jeder für diesen Prozeß autorisierten Vorrichtung erfolgen kann.

32. Vorrichtung nach einem oder mehreren der Ansprüche 26 bis 31,
gekennzeichnet durch
   - Mittel für mindestens eine Autorisierung dieser Vorrichtung durch mindestens einen Autorisierer als Mittel zum Austausch autorisierter geldwerter Beträge,
   - Sende- und Empfangsmittel auf dieser Vorrichtung zum verschlüsselten Senden und Empfangen dieser geldwerten Beträge als autorisierte Nachrichten und
   - Mittel zum Saldieren gleich autorisierter geldwerter Beträge auf dieser Vorrichtung.

17

## Claims

1. Method for encrypting/decrypting an input message into an output message by means of a branching network consisting of interlinked nodes,
   **characterized in**
   - the allocation of an address and a key information (K, A1) to each node of said branching network,
   - the generation of target-address sets to connect each node as a source node with a group of these nodes as target nodes, a first target address (A0) of each target-address set connecting said nodes to become a chain of nodes, and at least one second target address (A1) of each target-address set connecting said chain of nodes to become said branching network,
   - a step by step selection of target nodes and allocated key information (K, A1) in a selection run, each selection step selecting at least one target address (A0, A1) from a current target-address set, depending on a current character of said input message,
   - the formation of said encrypted/decrypted output message depending on said selected key information (K, A1).

2. Method according to claim 1,
   **characterized in**
   - the generation of said target-address set depending on said selected key information (K, A1) of a preceding selection step.

3. Method according to claim 1,
   **characterized in**
   - the generation of said target-address set depending on a target address (A0, A1) of a preceding selection step.

4. Method according to claim 1,
   **characterized in that**
   - counting of said selection steps and generating of said target-address set depending on the count number of a selection step.

5. Method according to claim 4,
   **characterized in**
   - the generation of said target-address set by means of an address step from a preceding target address, the step width amounting to one for the first target address (A0), to $2^{A-s}$ for the second target address (A1), and s being said count number of said selection step, and the value A being limited by the amount $2^A$ of nodes.

6. Method according to claim 1,
   **characterized in**
   - the generation of said target-address sets and/or key information (K, A1) by means of random events in a random method.

7. Method according to claim 1,
   **characterized in**
   - the generation of said target-address set by means of an address step from a preceding target address, the selection run starting from a target address $A_S$ and all nodes for the first target address (A0) being allocated the step width plus one and for the second target address (A1) the node $A_S+2$ is being allocated the step width minus one and to all other nodes the step width plus two is being allocated.

8. Method according to one or several claims 1 to 7,
   **characterized in that**
   - a selection key is determined for the selection of said target address (A0, A1), which selection key contains at least one character of any information as a selecting character,
   - said selecting character is allocated to at least one character of said input message, and
   - a current character of said input message is linked to said allocated selecting character for the selection of said target address (A0, A1).

9. Method according to one or several of the claims 1 to 8,

**characterized in that**
- an authenticator key is determined for the formation of an authenticator which contains at least one key character of any information,
- this key character is allocated to at least one node of the branching network,
- the modification of this allocated key character by means of the selection run along with the selection of the respectively allocated nodes, and
- an authenticator is formed depending on this modified authenticator key.

10. Method for encrypting/decrypting messages in a key unit, in which input messages for encrypting/decrypting into an output message select the key information (K, A1), which is allocated to nodes, by means of selection runs through a branching network consisting of interlinked said nodes,
**characterized in**
- the determination of said key information (K, A1) and a control information for an encrypting/decrypting process by at least one key,
- the division of said encrypting/decrypting process into at least one encrypting/decrypting procedure and a corresponding division of said key information (K, A1) into allocated procedure keys, a character of an encrypted/decrypted process-output message being formed in one encrypting/decrypting procedure,
- the division of said encrypting/decrypting procedure into at least two selection runs and corresponding division of said procedure key into allocated partial keys,
- the encryption/decryption of a procedure-input message into a procedure-output message for the formation of said character of said process-output message in at least two selection runs by means of said allocated partial keys, an input message for a next selection run being derived from an encrypted/decrypted output message of a preceding selection run with an individually modified sequence of characters, and
- the encryption/decryption of a process-input message into said process-output message in at least one procedure by means of said allocated procedure keys, the procedure-input message for a next procedure being derived from said procedure-output message of a preceding procedure, and said process-output message being obtained from the characters formed in the procedures.

11. Method according to claim 10,
**characterized in**
- the mutual examination of key equivalence between two of said key units, said first key unit examining in a first test step the equivalence between its own test information encrypted/decrypted by itself and the test information encrypted/decrypted in the same way by said second key unit,
and, in a second test step said second key unit examining the equivalence between its own test information encrypted/decrypted by itself and the test information encrypted/decrypted in the same way by said first key unit.

12. Method according to claim 10 or 11,
**characterized in**
- the common generation of a common key K by means of two such key units, said first key unit linking any own key KA to a received key KB by means of a linking rule A, to obtain a common key K, and said second key unit linking any own key KB to a received key KA by means of a linking rule B to obtain a common key K.

13. Method according to one or several of the claims 10 to 12,
**characterized in**
- the use of said key unit as a participant in at least one process, at least one participant key I being allocated to said key unit for identification,
- the allocation of at least one user key PIN1 to at least one user of said key unit and authorization of said user for said key unit by encrypting said participant key I into a user-participant key ID1 by means of said user key PIN1, and
- the identification of said authorized user for the process by decrypting said key ID1 into a participant key I by means of said user key PIN1, this encrypting and decrypting taking place within said key unit.

14. Method according to one or several of the claims 10 to 13,

**characterized in**

- the participation of said key unit in at least one process, this key unit being allocated at least one participant key I for identification,
- the allocation of at least one process key P to said process and authorization of said key unit for said process by way of encrypting said process key P into a participant-process key AN by means of the participant key I, and
- the identification of said authorized key unit for said process by way of decrypting said key AN into said process key P by means of said participant key I, this encrypting and decrypting taking place within said key unit.

15. Method according to claim 14,
    **characterized in that**
    - the allocation of an individual key Io to said key unit, which individual key Io may be used by any key unit having the same authorization,
    - the authorization of said process for said individual key Io by means of encrypting said key Io into a process-participant key ANo by means of said process key P whithin said key unit, and
    - access of said authorized process to said individual key Io by way of decrypting said key ANo into said individual key Io by means of said process key P, said access being able to be carried out within any key unit authorized for said process.

16. Method according to claim 15,
    **characterized in that**
    - said participant key Io is linked to a control information which restricts said participant key to one direction of encrypting/decrypting only, be it the one of encrypting or decrypting.

17. Device for encrypting/decrypting an input message (DIN) into an output message (DOUT) by means of a branching network consisting of memory locations (NM) which are interlinked as nodes,
    **characterized in**
    - memory locations (NM) as nodes, to which an address and a key information (K, A1) is allocated,
    - means for generating target-address sets to connect each memory location as a source node with a group of said memory locations as target nodes, a first target address (A0) of each target-address set connecting said memory locations to become a chain of memory locations, and at least one second target address (A1) of each target-address set interlinking said chain of memory locations to become said branching network,
    - means (AS) for a step by step selection of target nodes and allocated key information (K, A1) in a selection run, each selection step selecting at least one target address (A0, A1) from a current target-address set, depending on a current character of said input message, and
    - means (DS) to form said encrypted/decrypted output message (DOUT) depending on said selected key information (K, A1).

18. Device according to claim 17,
    **characterized in**
    - means for generating said target-address set depending on said selected key information (K, A1) of a preceding selection step.

19. Device according to claim 17,
    **characterized in**
    - means for generating said target-address set depending on a target address (A0, A1) of a preceding selection step.

20. Device according to claim 17,
    **characterized in**
    - means for counting said selection steps and for generating said target-address set depending on said count number of a selection step.

21. Device according to claim 20,
    **characterized in**
    - means for generating said target-address set by means of an address step from a preceding target address, the step width amounting to one for the first target address (A0), to $2^{A-S}$ for the second target address (A1), and s being said count number of said selection step and the value A being limited by the amount $2^A$ of nodes.

22. Device according to claim 17,
**characterized in**
- means for generating said target-address set and/or said key information (K, A1) depending on random events of a random method.

23. Device according to one or several of the claims 17 to 22,
**characterized in**
- means for a simultaneous execution of a multiplicity of selection steps by means of simultaneous access to a multiplicity of memory locations which are linked to each other by target addresses, for which a multiplicity of target-address sets is being generated,
a multiplicity of current characters of said input message (DIN) selecting a multiplicity of memory locations and allocated key information (K, A1) by way of linkage with said multiplicity of target-address sets.

24. Device according to one or several of claims 17 to 23,
**characterized in**
- means (AS), which for the selection of the target address (A0, A1) link a current character of said input message (DIN) with an allocated selecting character of a selection key (S).

25. Device according to one or several of claims 17 to 24,
**characterized in**
- means (AM) which modify key characters of an authenticator key, which are allocated to said memory locations (NM) of said branching network with selection of these allocated memory locations in said selection run, an authenticator being formed depending on said modified authenticator key after at least one selection run has been completed.

26. Device for encrypting/decrypting messages, in which input messages (DIN) select key information (K, A1) which is allocated to memory locations (NM) for encrypting/decrypting into an output message (DOUT) by means of selection runs through a branching network consisting of said interlinked memory locations (NM),
**characterized in**
   - means for determining said key information (K, A1) and a control information for an encrypting/decrypting process by at least one key,
   - means for dividing said encrypting/decrypting process into at least one encrypting/decrypting procedure and a corresponding division of said key information (K, A1) into allocated procedure keys, a character of an encrypted/decrypted process-output message (DOUT) being formed in an encrypting/decrypting procedure,
   - means for dividing said encrypting/decrypting procedure into at least two selection runs and corresponding division of said procedure key into allocated partial keys,
   - means for controlling said encrypting/decrypting procedure for encrypting/decrypting a procedure-input message into a procedure-output message for the formation of said character of said process-output message (DOUT) in at least two selection runs by means of said allocated partial keys, an input message for a next selection run being derived from an encrypted/decrypted output message of a preceding selection run with an individually modified sequence of characters, and
   - means for controlling said encrypting/decrypting process for encrypting/decrypting a process-input message (DIN) into said process-output message (DOUT) in at least one procedure by means of said allocated procedure keys, said procedure-input message for a next procedure being derived from said procedure-output message of a preceding procedure and said process-output message (DOUT) being obtained from said characters formed in said procedures.

27. Device according to claim 26,
**characterized in**
- means for a mutual examination of key equivalence between two such devices, said first device examining in a first test step the equivalence between its own test information encrypted/decrypted by itself and the test information encrypted/decrypted in the same way by said second device, and in a second test step said second device examining the equivalence between its own test information encrypted/decrypted by itself and the test information encrypted/decrypted in the same way by said first device.

**28.** Device according to claim 26 or 27,
**characterized in**
- means for commonly generating a common key K by means of two such devices, said first device linking any own key KA to a received key KB by means of a linking rule A to obtain a common key K, and said second device linking any own key KB to a received key KA by means of a linking rule B to obtain a common key K.

**29.** Device according to one or several of claims 26 to 28,
**characterized in**
- the use as a participant in at least one process,
- means (ID) for allocating at least one participant key I to said device to identify said device for said process,
- means for allocating at least one user key PIN1 to at least one user of said device and for authorizing said user for said device by encrypting said participant key I into a user-participant key ID1 by means of said user key PIN1, and
- means for identifying said authorized user for said process by decrypting said key ID1 into said participant key I by means of said user key PIN1, this encrypting and decrypting taking place within said device.

**30.** Device according to one or several of claims 26 to 29,
**characterized in**
- the participation in at least one process,
- means (ID) for allocating at least one participant key T to said device to identify said device for this process,
- means for allocating at least one process key P to said process and for authorizing said device for said process by way of encrypting said process key P into a participant-process key AN by means of said participant key I, and
- means for identifying said authorized device for said process by way of decrypting said key AN into said process key P by means of said participant key I, this encrypting and decrypting taking place within said device.

**31.** Device according to claim 30
**characterized in**
- means (ID) for allocating an individual key Io to said device, which key Io may be used by any device having the same authorization,
- means for authorizing said process for said individual key Io by means of encrypting said key Io into a process-participant key ANo by means of said process key P within said device, and
- means for the access of said authorized process to said individual key Io by way of decrypting said key ANo into said individual key Io by means of said process key P, said access being able to be carried out within any device authorized for said process.

**32.** Device according to one or several of the claims 26 to 31,
**characterized in**
- means for at least one authorization of said device by at least one authorizer as a means for exchanging authorized cash amounts,
- transmitting means and receiving means on said device for encrypted transmitting and receiving of said cash amounts as authorized messages, and
- means for balancing cash amounts which have been equally authorized on said device.

## Revendications

**1.** Méthode pour l'encodage/décodage d'un message d'entrée en un message de sortie au moyen d'un treillis ramifié composé de noeuds en réseau,
**caractérisée en ce que**
- chaque noeud du treillis ramifié est attribué une addresse et une information de clé (K, A1),
- des groupes d'addresses de destination sont génerés pour relier chacque noeud comme noeud de source à un groupe de ces noeuds comme noeuds de destination, une première addresse de destination (A0) de chaque groupe d'addresses de destination reliant les noeuds à former une chaîne de noeuds, et au moins une deuxième addresse de destination (A1) de chaque groupe d'addresses de destination reliant cette chaîne de noeuds pour former le treillis ramifié,

- des noeuds de destination et l'information de clé attribuée (K, A1) sont sélectionnés progressivement en une course de sélection, chaque pas de sélection sélectionnant au moins une addresse de destination (A0, A1) d'un groupe d'addresses de destination courant en dépendance d'un caractère courant du message d'entrée, et

- le message de sortie encodé/décodé est formé en dépendance de l'information de clé (K, A1) sélectionnée.

2. Méthode selon la revendication 1,
**caractérisée en ce que**
- le groupe d'addresses de destination est généré en dépendance de l'information de clé (K, A1) sélectionnée d'un pas de sélection précedent.

3. Méthode selon la revendication 1,
**caractérisée en ce que**
- le groupe d'addresses de destination est généré en dépendance d'une addresse de destination (A0, A1) d'un pas de sélection précédent.

4. Méthode selon la revendication 1,
**caractérisée en ce que**
- les pas de sélection sont comptés, et le groupe d'addresses de destination est généré en dépendance du numéro de compte d'un pas de sélection.

5. Méthode selon la revendication 4,
**caractérisée en ce que**
- le groupe d'addresses de destination est généré au moyen d'un pas d'addressage d'une addresse de destination précédente, la largeur de pas étant un pour la première addresse de destination (A0), et $2^{A-s}$ pour la deuxième addresse de destination (A1), et s étant le numéro de compte du pas de sélection, et la valeur A étant limité par le nombre $2^A$ de noeuds.

6. Méthode selon la revendication 1,
**caractérisée en ce que**
- les groupes d'addresses de destination et/ou l'information de clé (K, A1) sont générés au moyen d'un événement aléatoire d'une méthode aléatoire.

7. Méthode selon la revendication 1,
**caractérisée en ce que**
- le groupe d'addresses de destination est généré au moyen d'un pas d'addressage d'une addresse de destination précédente, la course de sélection commençant à partir d'une addresse de destination $A_S$, et tous les noeuds étant attribués la largeur de pas plus un pour la première addresse de destination (A0), le noeud $A_S+2$ étant attribué la largeur de pas moins un pour la deuxième addresse de destination (A1), et tous les autres noeuds étant attribués la largeur de pas plus deux.

8. Méthode selon une ou plusieurs des revendications 1 à 7,
**caractérisée en ce que**
- une clé de sélection est déterminé pour la sélectiion de l'addresse de destination (A0, A1), quelle clé de sélection contient au moins un caractère d'une information quelconque comme caractère de sélection,
- ce caractère de sélection est attribué au moins à un caractère du message d'entrée, et
- un caractère courant du message d'entrée est enchaîné au caractère de sélection attribué pour la sélection de l'addresse de destination (A0, A1).

9. Méthode selon une ou plusieurs des revendications 1 à 8,
**caractérisée en ce que**
- une clé d'authentification est déterminée pour la formation d'un authentificateur, contenant au moins un caractère de clé d'une information quelconque,
- ce caractère de clé est attribué à au moins un noeud du treillis ramifié,

- ces caractères de clé sont modifiés par la course de sélection avec la sélection des noeuds respectivement attribués, et
- un authentificateur est formé en dépendance de cette clé d'authentification modifiée.

10. Méthode pour l'encodage/décodage de messages dans une unité de clé, des messages d'entrée, pour effectuer l'encodage/décodage en un message de sortie, sélectionnant les informations de clé (K, A1) au moyen de courses de sélection au travers d' un treillis ramifié composé de noeuds reliés, ces informations de clé (K, A1) étant attribuées à ces noeuds,
    **caractérisée en**
    - la détermination de cette information de clé (K, A1) et d'une information de contrôle pour un procès d'encodage/décodage par au moins une clé,
    - la division de ce procès d'encodage/décodage en au moins une procédure d'encodage/décodage, et une division correspondante de cette information de clé (K, A1) en des clés de procédure attribuées, un caractère d'un message de sortie de procès encodé/décodé étant formé en une procédure d'encodage/décodage,
    - la division de la procédure d'encodage/décodage en au moins deux courses de sélection, et une division correspondante de cette clé de procédure en des clés partielles attribuées,
    - l'encodage/décodage d'un message d'entrée de procédure en un message de sortie de procédure pour la formation du caractère du message de sortie de procès en au moins deux courses de sélection par moyen des clés partielles attribuées, un message d'entrée pour une prochaine course de sélection étant dérivé d'un message de sortie encodé/décodé d'une course de sélection précédente avec une séquence de caractères individuellement modifiée, et
    - l'encodage/décodage d'un message d'entrée de procès en un message de sortie de procès en au moins une procédure au moyen des clés de procédure attribuées, le message d'entrée de procédure étant dérivé pour une prochaine procédure du message de sortie de procédure d'une procédure précédente, et le message de sortie de procès étant obtenu des caractères formés dans les procédures.

11. Méthode selon la revendication 10,
    **caractérisée en**
    - un examen mutuel de l'équivalence de clés entre deux telles unités de clé, en un premier pas d'examen la première unité de clé examinant l'équivalence entre l'information d'examen encodée/décodée par elle même et l'information d'examen encodée/décodée de la même façon par la deuxième unité de clé, et en un deuxième pas d'examen la deuxième unité de clé examinant l'équivalence entre l'information d'examen encodée/décodée par elle même et l'information d'examen encodée/décodée de la même façon par la première unité de clé.

12. Méthode selon la revendication 10 ou 11,
    **caractérisée en**
    - une génération commune d'une clé commune K par deux telles unités de clé, la première unité de clé enchaînant par moyen d'une règle d'enchaînement A une clé propre KA quelconque à une clé KB reçue, pour obtenir la clé commune K, et la deuxième unité de clé enchaînant par moyen d'une règle d'enchaînement B une clé propre KB quelconque à une clé KA reçue, pour obtenir la clé commune K.

13. Méthode selon une ou plusieurs des revendications 10 à 12,
    **caractérisée en**
    - l'utilisation de l'unité de clé comme un participant en au moins un procès, cette unité de clé étant attribuée au moins une clé de participant I pour l'identification,
    - l'attribution d'au moins une clé d'usager PIN1 à au moins un usager de cette unité de clé, et autorisation de cet usager pour cette unité de clé par moyen d'encodage de la clé de participant I en une clé d'usager-participant ID1 au moyen de la clé d'usager PIN1 , et
    - l'identification de cet usager autorisé pour le procès par moyen de décodage de cette clé ID1 en la clé de participant I au moyen de la clé d'usager PIN1, cet encodage et décodage ayant lieu à l'interieur de cette unité de clé.

14. Méthode selon une ou plusieurs des revendications 10 à 13,
    **caractérisée en**
    - la participation de l'unité de clé en au moins un procès, à cette unité de clé étant attribué au moins une clé de participant I pour l'identification,

EP 0 458 210 B1

- l'attribution d'au moins une clé de procès P à ce procès, et autorisation de l'unité de clé pour ce procès par voie d'encodage de la clé de procès P en une clé de procès de participant AN au moyen de la clé de participant I, et
- l'identification de cette unité de clé autorisée pour le procès par voie de décodage de cette clé AN par moyen de la clé de participant I en la clé de procès P, cet encodage et décodage ayant lieu à l'intérieur de cette unité de clé.

15. Méthode selon la revendication 14,
**caractérisée en**
- l'attribution d'une clé individuelle Io à cette unité de clé, lequel peut être utilisé par toute unité de clé autorisée de la même façon,
- l'autorisation du procès pour cette clé individuelle Io par encodage de cette clé Io au moyen de la clé de procès P en une clé de participant de procès ANo à l'intérieur de cette unité de clé, et
- l'accès de ce procès autorisé à la clé individuelle Io par décodage de cete clé ANo au moyen de la clé de procès P en la clé individuelle Io, cet accès pouvant avoir lieu à l'intérieur de toute unité de clé autorisée pour ce procès.

16. Méthode selon la revendication 15,
**caractérisée en**
- le chaînage de la clé de participant Io à une information de contrôle qui le limite à une direction d'encodage/décodage seulement, soit celle de l'encodage ou celle du décodage.

17. Dispositif pour l'encodage/décodage d'un message d'entrée (DIN) en un message de sortie (DOUT) au moyen d'un treillis ramifié composé d'emplacements de mémoire (NM) liés en réseau entre eux comme noeuds,
**caractérisé en**
- des emplacements de mémoire (NM) comme noeuds, auxquels est attribués une addresse et une information de clé (K, A1),
- des moyens pour générer des groupes d'addresses de destination pour relier chaque emplacement de mémoire comme noeud de source à un groupe de ces emplacements de mémoire comme noeuds de destination, une première addresse de destination (A0) de chaque groupe d'addresses de destination liant les emplacements de mémoire à former une chaîne d'emplacements de mémoire, et au moins une deuxième addresse de destination (A1) de chaque groupe d'addresses de destination liant en réseau cette chaîne d'emplacements pour former le treillis ramifié,
- des moyens (AS) pour une sélection progressive de noeuds de destination et de l'information de clé attribuée (K, A1) en une course de sélection, chaque pas de sélection sélectionnant au moins une addresse de destination (A0, A1) d'un groupe d'addresses de destination courant, en dépendance d'un caractère courant du message d'entrée, et
- des moyens (DS) pour la formation du message de sortie encodé/décodé (DOUT) en dépendance de l'information de clé (K, A1) sélectionnée.

18. Dispositif selon la revendication 17,
**caractérisé en**
- des moyens pour la génération du groupe d'addresses de destination en dépendance de l'information de clé (K, A1) sélectionnée d'un pas de sélection précédent.

19. Dispositif selon la revendication 17,
**caractérisé en**
- des moyens pour la génération du groupe d'addresses de destination en dépendance d'une addresse de destination (A0, A1) d'un pas de sélection précédent.

20. Dispositif selon la revendication 17,
**caractérisé en**
- des moyens pour compter les pas de sélection et pour générer le groupe d'addresses de destination en dépendance du numéro de compte d'un pas de sélection.

21. Dispositif selon la revendication 20,
**caractérisé en**
- des moyens pour générer le groupe d'addresses de destination au moyen d'un pas d'addressage d'une addresse de destination précédente, la largeur de pas étant un pour la première addresse de destination (A0), et $2^{A-S}$ pour la deuxième addresse de destination (A1), et s étant le numéro de compte du pas de sélection, et la valeur A étant limitée par le nombre $2^A$ de noeuds.

**22.** Dispositif selon la revendication 17,
**caractérisé en**
- des moyens pour générer le groupe d'addresses de destination et/ou l'information de clé (K, A1) en dépendance d'événements aléatoires d'une méthode aléatoire.

**23.** Dispositif selon une ou plusieurs des revendications 17 à 22,
**caractérisé en**
- des moyens pour l'exécution simultanée d'une multiplicité de pas de sélection par accès simultané à une multiplicité à travers des addresses de destination d'emplacements de mémoires enchaînés entre eux, pour lesquels une multiplicité de groupes de destination est générée,
une multiplicité de caractères courants du message d'entrée (DIN) sélectionnant une multiplicité d'emplacements de mémoire et une multiplicité d'informations de clé (K, A1) attribuées par moyen d'enchaînement à cette multiplicité de groupes d'addresses de destination.

**24.** Dispositif selon une ou plusieurs des revendications 17 à 23,
**caractérisé en**
- des moyens (AS), qui enchaînent un caractère courant du message d'entrée (DIN) à un caractère de sélection courant d'une clé de sélection (S) pour la sélection d'une addresse de destination (A0, A1).

**25.** Dispositif selon une ou plusieurs des revendications 17 à 24,
**caractérisé en**
- des moyens (AM), qui modifient des caractères de clé d'une clé d'authentification attribués aux emplacements de mémoire (NM) du treillis ramifié, avec la sélection de ces emplacements de mémoire attribués dans la course de sélection, un authentificateur étant formé en dépendance de cette clé d'authentification modifiée après qu'au moins une course de sélection soit terminée.

**26.** Dispositif pour l'encodage/décodage de messages, des messages d'entrée (DIN), pour effectuer l'encodage/décodage en un message de sortie (DOUT), sélectionnant les informations de clé (K, A1) au moyen de courses de sélection au travers d'un treillis ramifié composé d'emplacements de mémoire (NM) reliés en réseau, ces informations de clé (K, A1) étant attribuées à ces emplacements de mémoire (NM),
**caractérisé en**
- des moyens pour déterminer cette information de clé (K, A1), et une information de contrôle pour un procès d'encodage/décodage par au moins une clé,
- des moyens pour diviser ce procès d'encodage/décodage en au moins une procédure d'encodage/décodage, et une division correspondante de cette information de clé (K, A1) en des clés de procédure attribuées, un caractère d'un message de sortie de procès encodé/décodé (DOUT) étant formé en une procédure d'encodage/décodage,
- des moyens pour diviser la procédure d'encodage/décodage en au moins deux courses de sélection, et une division correspondante de la clé de procédure en des clés partielles attribuées,
- des moyens pour contrôler cette procédure d'encodage/décodage pour l'encodage/décodage d'un message d'entrée de procédure en un message de sortie de procédure pour former le caractère du message de sortie de procès (DOUT) en au moins deux courses de sélection par moyen des clés partielles attribuées, un message d'entrée pour une prochaine course de sélection étant dérivé d'un message de sortie encodé/décodé d'une course de sélection précédente avec une séquence de caractères individuellement modifiée, et
- des moyen pour le contrôle du procès d'encodage/décodage pour l'encodage/décodage d'un message d'entrée de procès (DIN) en un message de sortie de procès (DOUT) en au moins une procédure au moyen de la clé de procédure attribuée, le message d'entrée de procédure étant dérivé pour une procédure prochaine du message de sortie de procédure d'une procédure précédente, et le message de sortie de procès (DOUT) étant obtenu des caractères formés dans les procédures.

**27.** Dispositif selon la revendication 26,
**caractérisé en**
- des moyens pour mutuellement examiner l'équivalence de clés entre deux tels dispositifs, en un premier pas d'examen le premier dispositif examinant l'équivalence entre l'information d'examen encodée/décodée par lui même et l'information d'examen encodée/décodée de la même façon par le deuxième dispositif, et

en un deuxième pas d'examen le deuxième dispositif examinant l'équivalence entre l'information d'examen encodée/décodée par lui même et l'information d'examen encodée/décodée de la même façon par le premier dispositif.

28. Dispositif selon la revendication 26 ou 27,
   **caractérisé en**
   - des moyens pour générer en commun une clé commune K par deux tels dispositifs, le premier dispositif enchaînant par moyen d'une règle d'enchaînement A une clé propre KA quelconque à une clé KB reçue pour obtenir la clé commune K, et le deuxième dispositif enchaînant par moyen d'une règle d'enchaînement B une clé propre KB quelconque à une clé KA reçue pour obtenir la clé commune K.

29. Dispositif selon une ou plusieurs des revendications 26 à 28,
   **caractérisé en**
   - l'utilisation comme participant en au mois un procès,
   - des moyens (ID) pour attribuer au moins une clé de participant I à ce dispositif pour identifier ce dispositif pour ce procès,
   - des moyens pour attribuer au moins une clé d'usager PIN1 à au moins un usager de ce dispositif, et pour autoriser cet usager pour ce dispositif par moyen d'encodage de la clé de participant I en une clé d'usager-participant ID1 au moyen de la clé d'usager PIN1, et
   - des moyens pour identifier cet usager autorisé pour le procès par moyen de décodage de cette clé ID1 en la clé de participant I au moyen de la clé d'usager PIN1, cet encodage et décodage ayant lieu à l'intérieur de ce dispositif.

30. Dispositif selon une ou plusieurs des revendications 26 à 29,
   **caractérisé en**
   - la participation en au moins un procès,
   - des moyens (ID) pour attribuer au moins une clé de participant I à ce dipositif pour identifier ce dispositif pour ce procès,
   - des moyens pour attribuer au moins une clé de procès P à ce procès, et pour autoriser le dispositif pour ce procès par voie d'encodage de la clé de procès P en une clé de procès de participant AN par moyen de la clé de participant I, et
   - des moyens pour identifier ce dispositif autorisé pour le procès par voie de décodage de cette clé AN par moyen de la clé de participant I en une clé de procès P, cet encodage et décodage ayant lieu à l'intérieur de ce dispositif.

31. Dispositif selon la revendication 30,
   **caractérisé en**
   - des moyens (ID) pour attribuer une clé individuelle Io à ce dispositif, quelle clé individuelle Io peut être utilisé par tout dispositif autorisé de la même façon,
   - des moyens pour autoriser le procès pour cette clé individuelle Io par encodage de cette clé Io au moyen d'une clé de procès P en une clé de participant de procès ANo à l'intérieur de ce dispositif, et
   - des moyens pour que ce procès autorisé puisse avoir accès à la clé individuelle Io par décodage de cette clé ANo au moyen de la clé de procès P en la clé individuelle Io, cet accès pouvant avoir lieu à l'intérieur de tout dispositif autorisé pour ce procès.

32. Dispositif selon une ou plusieurs des revendications 26 à 31,
   **caractérisé en**
   - des moyens pour au moins une autorisation de ce dispositif par au moins un autorisateur comme moyen pour échanger des montant d'argent autoriés,
   - des moyens de transmission et réception sur ce dispositif pour transmettre et recevoir de façon encodée ces montants représentant de l'argent comme des messages autorisés, et
   - des moyens pour totaliser sur ce dispositif des montants représentant de l'argent qui ont été autorisés de la même façon.

FIG.1

FIG.3

| KNOTEN | N | A FÜR AST | | | | K FÜR AST | | | | $V_A$ | $V_K$ |
|---|---|---|---|---|---|---|---|---|---|---|---|
| | | 0 | 1 | 2 | 3 | 0 | 1 | 2 | 3 | | |
| 0 | 2 | 3 | 2 | – | – | 1 | 0 | – | – | 0 | 0 |
| 1 | 4 | 3 | 0 | 2 | 1 | 10 | 11 | 01 | 00 | 0 | 0 |
| 2 | 2 | 1 | 3 | – | – | 0 | 1 | – | – | 0 | 0 |
| 3 | 2 | 0 | 1 | – | – | 0 | 1 | – | – | 0 | 0 |

FIG.2

| ZELLE | A0 | A1 | K |
|---|---|---|---|
| 0 | 2 | 3 | 0 |
| 1 | 0 | 1 | 0 |
| 2 | 3 | 0 | 1 |
| 3 | 1 | 2 | 1 |

FIG.4

| ZELLE | A0 | A1 | K |
|---|---|---|---|
| 0 | 1 | 2 | 0 |
| 1 | 2 | 0 | 1 |
| 2 | 3 | 1 | 1 |
| 3 | 0 | 3 | 0 |

FIG.5

| ZELLE | A1 | K |
|---|---|---|
| 0 | 2 | 0 |
| 1 | 0 | 1 |
| 2 | 1 | 1 |
| 3 | 3 | 0 |

FIG.5.1

FIG.6

FIG.7

$f_{A1}(Z),AS,C,N,S$

NADR

NETZSPEICHER NM

K, A1

ADRESSEN-AUSWAHL ASW

PARAMETER-SPEICHER PM

i
f(R)
R
S
C
$f_{A1}(Z)$
$f_K(A1)$
N
AS

$f_K(A1),C,N,S$

DIN

DATEN-UMSCHLÜSSLER. DS

KY

SCHLÜSSEL-REGISTER KR

f(R),R

DO

RD

f(R),R

NADR

AUTHENTIKATOR-SPEICHER AM

KY

IDENTITÄTS-MERKMAL ID

RÜCKKOPPLUNGS-REGISTER RR

DOUT

PIN

ZUFALLS-GENERATOR RD

KY

REGISTER KR1

KY

**FIG.8**

| PROZEDUR | SCHLÜSSEL[1] | SELEKTIER-DURCHLAUF | BITFOLGE |
|---|---|---|---|
| 1 | $K0_1 \ldots K3_1$ | 1 | 3-1-2 |
| | $K4_1, \quad K5_1$ | 2 | 2-3-1 |
| | $K6_1$ | 3 | $\underline{1}$-2-3 |
| 2 | $K1_2 \ldots K4_2$ | 1 | 1-3-2 |
| | $K5_2, \quad K6_2$ | 2 | 1-$\underline{2}$-3 |
| 3 | $K3_3 \ldots K6_3$ | 1 | 1-2-$\underline{3}$ |

**FIG.9**

[1] Nicht besetzte Schlüsselbit $Kx_i = 0$